# EUROPÄISCHE PATENTSCHRIFT

(11) **EP 3 364 512 B1**
(45) Veröffentlichungstag und Bekanntmachung des Hinweises auf die Patenterteilung: **13.05.2020**
(21) Anmeldenummer: 18000133.1
(22) Anmeldetag: 13.02.2018
(51) Int. Cl.: H02H 3/093, H02H 3/027, H02H 3/033, H02H 7/085

(54) **VERFAHREN UND ANORDNUNG ZUM SCHUTZ EINES ELEKTROMOTORS VOR ÜBERHITZUNG**
METHOD AND ASSEMBLY FOR PROTECTING AN ELECTRICAL MOTOR AGAINST OVERHEATING
PROCÉDÉ ET DISPOSITIF DE PROTECTION D'UN MOTEUR ÉLECTRIQUE CONTRE LA SURCHAUFFE

(30) Priorität: 20.02.2017 DE 102017001560
(43) Veröffentlichungstag der Anmeldung: 22.08.2018
(73) Patentinhaber: WILO SE, 44263 Dortmund (DE)
(72) Erfinder: Starkmuth, Timo, 44869 Bochum (DE); Hubo-Kleiss, Michael, 45527 Hattingen (DE); Oettmeier, Martin, 45549 Sprockhövel (DE); Nowak, Dirk, 58455 Witten (DE)
(74) Vertreter: Cohausz Hannig Borkowski Wißgott

(56) Entgegenhaltungen:
- EP-A1- 0 423 737
- US-A- 4 327 391

## Beschreibung

Die Erfindung betrifft ein Verfahren und eine Schaltungsanordnung zum Schutz eines Elektromotors insbesondere eines Kreiselpumpenaggregats vor einer Übertemperatur, wobei im Falle eines Fehlers eine Unterbrechung einer Spannungsversorgung durch Öffnen eines Trennmittels erfolgt, gemäß dem Oberbegriff des Anspruchs 1.

Im Betrieb eines Elektromotors können verschiedene Störungen auftreten, die eine abnormale Erwärmung der Motorwicklungen des Elektromotors zufolge haben können. Ein Beispiel hierfür ist die Blockade der Motorwelle, auf die der Motor mit einem maximalen Motorstrom reagieren würde, um ein maximales Drehmoment aufzubringen und die Motorwelle in Drehung zu versetzen. Ein anderes Beispiel ist ein Kurzschluss in der Leistungselektronik, durch welchen ein Kurzschlussstrom über die Motorwicklungen fließt, ohne dass der Elektromotor dreht. Die in den Motorwicklungen durch den hohen Motorstrom erzeugte Wärme wird an das Motorgehäuse übertragen, an dessen Außenseite dann eine Verbrennungsgefahr für einen Nutzer gegeben ist. Um dem Risiko einer Verbrennung vorzubeugen, sind in verschiedenen Richtlinien und Normen, z.B. IEC60335 Kapitel 19, Temperaturgrenzwerte definiert, die elektrische Produkte einhalten müssen, um im europäischen oder sonstigen Markt zugelassen zu werden.

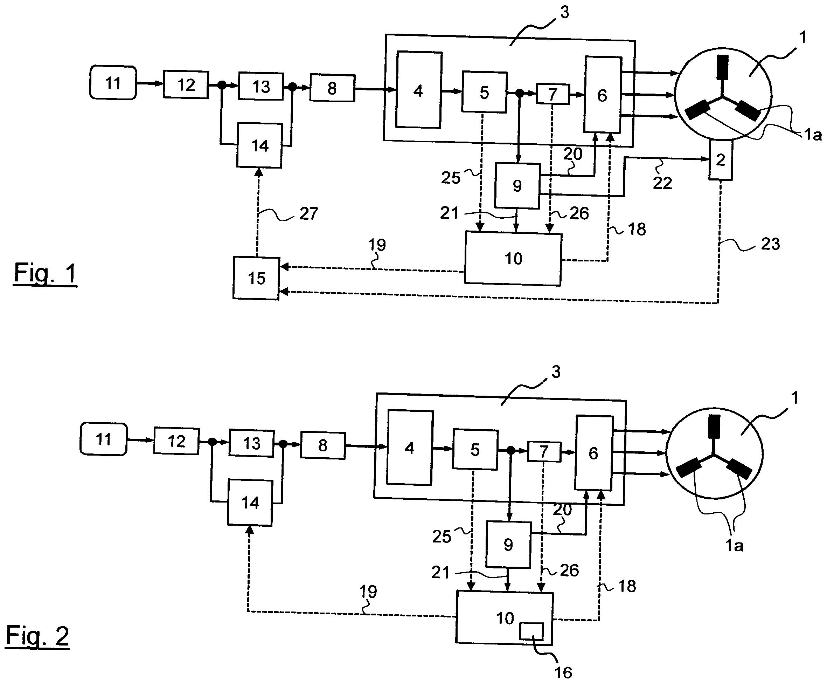

Bei Elektromotoren ist es bekannt, die Motortemperatur über einen Temperaturfühler, beispielsweise einen PTC (Positiv Temperature Coefficient) oder anderen temperaturabhängigen Widerstand, zu messen, der im Stator nahe der Motorwicklungen angeordnet ist, um die Wicklungstemperatur zu erfassen. Eine solche Anordnung zeigt Fig. 1. Das Ausgangssignal des Temperaturfühlers 2 steuert hier direkt ein Trennrelais 14. Über ein UND-Gatter 15 ist das Ausgangssignal mit einem zweiten Ausgangssignal einer Steuereinheit 10 verknüpft, welches im Normalfall Fehlerfreiheit signalisiert. Tritt irgendein überwachter Fehler auf, wechselt das zweite Steuersignal seinen Wert. Tritt eine Übertemperatur auf. Wechselt das Ausgangssignal des Temperaturfühlers seinen Wert und signalisiert einen Temperaturalarm. In beiden Fällen, wechselt infolgedessen der Ausgang des UND-Gatters 15 seinen Wert und das Trennrelais 14 fällt somit ab, so dass der Elektromotor 2 von der Netzspannungsversorgung 11 getrennt und in einen betriebssicheren Zustand überführt wird. Diese Lösung für einen Schutz gegen Übertemperatur ist rein Hardware-basiert, und somit schnell, zuverlässig und robust. Das Vorhandensein des Temperaturfühlers 2 verteuert jedoch der Elektromotor. Die Verschaltung und Anordnung des Temperaturfühlers im Stator des Elektromotors 1 führen zu einem komplizierteren Aufbau und schwierigeren Montage des Elektromotors.

Aus dem US Patent 4,327,391 A ist ein Verfahren und eine Schaltung zum Schutz eines Gleichstrommotors vor einer Übertemperatur bekannt, bei dem der Motorstrom gemessen und mit einem Referenzwert verglichen wird, um festzustellen, wann ein schädlicher Überstrom im Vergleich zu einem Referenzstrom vorliegt. Es wird ein Signal erzeugt, welches die Differenz zwischen dem gemessenen Motorstrom und dem Referenzstrom darstellt. Anschließend wird eine Pulsfolge erzeugt, deren Frequenz direkt proportional zur Höhe der genannten Differenz ist und somit gleichzeitig die tatsächliche Höhe des zu hohen Motorstroms angibt. Die Pulse der Pulsfolge sind umso schmaler, je mehr der Motorstrom den Referenzwert übersteigt. Die Pulse werden mit einem Zähler gezählt, und es erfolgt eine Abschaltung der Leistungszufuhr zum Motor, wenn ein vorbestimmter Maximalwert des Zählers erreicht ist. Da die Breite der Pulse, bzw. die Pulsrate abhängig von der Höhe des Motorstroms ist, wird umso schneller gezählt, je höher der Motorstrom über dem Grenzwert liegt. Somit wird stets die motorstromabhängige maximale thermische Belastbarkeit ausgenutzt. Die Schutzschaltung ist vergleichsweise komplex.

Es ist Aufgabe der vorliegenden Erfindung, einen konstruktiv einfacheren Übertemperaturschutz für einen Elektromotor bereitzustellen, der zuverlässig, schnell und sicher ist.

Diese Aufgabe wird durch ein Verfahren mit den Merkmalen des Anspruchs 1 sowie durch eine Schaltungsanordnung mit den Merkmalen des Anspruchs 14 gelöst. Vorteilhafte Weiterbildungen sind in den Unteransprüchen angegeben und werden nachfolgend erläutert.

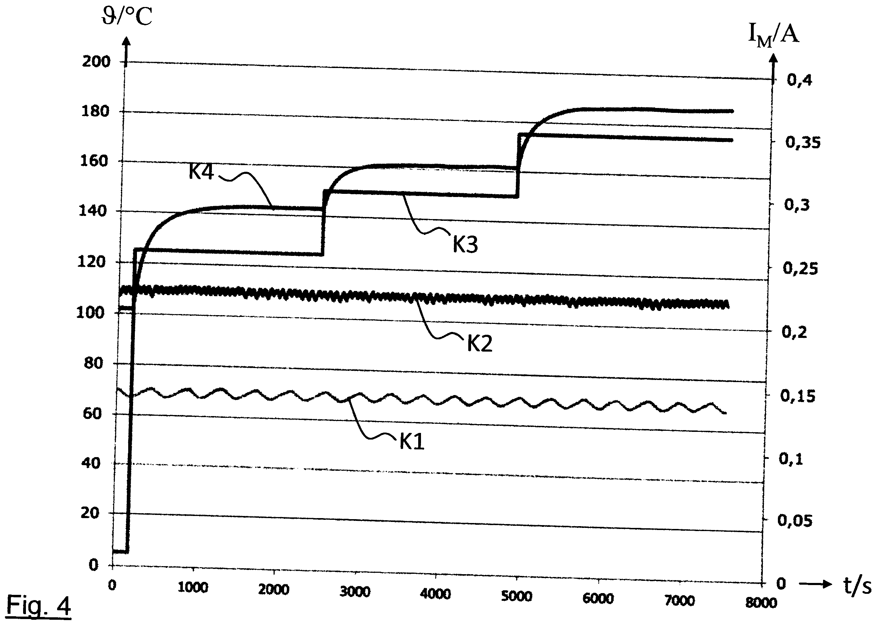

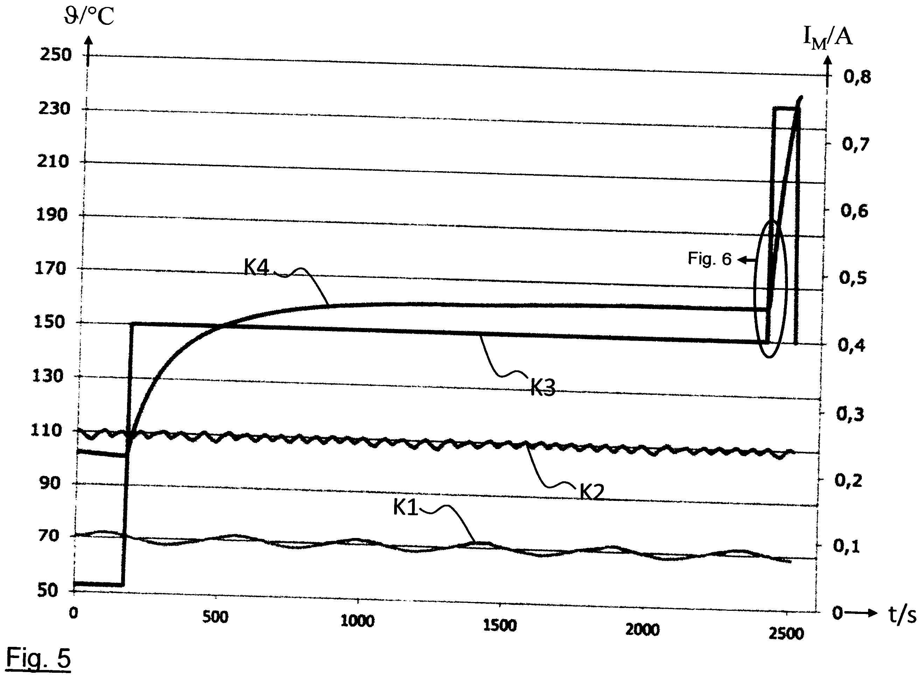

Der Erfindung liegt die Erkenntnis zu Grunde, dass die Wicklungstemperatur im Wesentlichen von dem in den Wicklungen fließenden Strom abhängig ist (∼R·l_{M}²), jedoch auch von der Umgebungstemperatur und bei einem nasslaufenden Motor, der eine Heizungsumwälzpumpe antreibt, vor allem auch von der Temperatur des geförderten Mediums, das im Falle eines Heizmediums über 100°C liegen kann. Übersteigt die Medientemperatur die Umgebungstemperatur des Elektromotors, kann die Umgebungstemperatur vernachlässigt werden. Umgekehrt verhält sich dies ebenso. Die Medientemperatur oder Umgebungstemperatur äußert sich hinsichtlich der Wicklungstemperatur in einer Art Offset. Zudem wurde erkannt, dass ein bestimmter Motorstrom einen bestimmten, endlichen Temperaturanstieg der Wicklungstemperatur bewirkt, wie dies Fig. 4 und 5 zeigen. In dieser Figur 4 zeigt die Kurve K1 die Umgebungstemperatur, die um etwa 70°C schwankt. Kurve K2 zeigt die Medientemperatur, die zwischen 107°C und 110°C schwankt. Stromkurve K3= l_{M}(t) beinhaltet Sprünge auf 250mA, 300mA und 350mA. Jeder Sprung des Motorstroms führt hier zu einer begrenzten Erhöhung der Wicklungstemperatur K4 = ϑ(t), wobei sich die Wicklungstemperatur K4 mit der Zeit asymptotisch einer bestimmten Temperatur nähert, bei 250mA gegen ca.143°C, bei 300mA gegen ca. 162°C, bei 300mA gegen ca. 188°C. Diese Werte sind selbstverständlich vom Aufbau und von der Art des Motors abhängig, insbesondere von der Größe und folglich Wärmeaufnahmekapazität des Stators, gleichwohl aber für einen bestimmten Elektromotor charakteristisch und werksseitig feststellbar. Somit kann jedem Motorstrom eine bestimmte Wicklungstemperatur zugeordnet werden.

Für einen Schutz eines Elektromotors gegen Überhitzung nach Maßnahme der einschlägigen Richtlinien und Normen ist die genaue Kenntnis der aktuellen Motortemperatur nicht von Bedeutung. Vielmehr muss schlichtweg sichergestellt sein, dass eine vorgeschriebene maximale Motortemperatur, insbesondere außen am Motorgehäuse sowie in den Wicklungen, nicht überschritten wird, um die Gefahr einer Verbrennung zu vermeiden. Mit der zuvor gewonnenen Kenntnis, dass jedem Motorstrom eine bestimmte Wicklungstemperatur zugeordnet werden kann, kann umgekehrt zu einer bestimmten Grenztemperatur ϑₗᵢₘ ein entsprechender Grenzstrom l_{M,lim} festgelegt werden, der als Referenz für diese Grenztemperatur ϑₗᵢₘ dient. Sinnvollerweise liegt diese Grenztemperatur ϑₗᵢₘ unterhalb der maximalen zulässigen Motortemperatur ϑₘₐₓ, wobei die maximal zulässige Motortemperatur je nach Schutzklasse vorgegeben ist. Bei einer dauerhaften maximal zulässigen Motortemperatur von ϑₘₐₓ = 190°C kann die Grenztemperatur beispielsweise bei ϑₗᵢₘ = 160°C oder 165°C liegen.

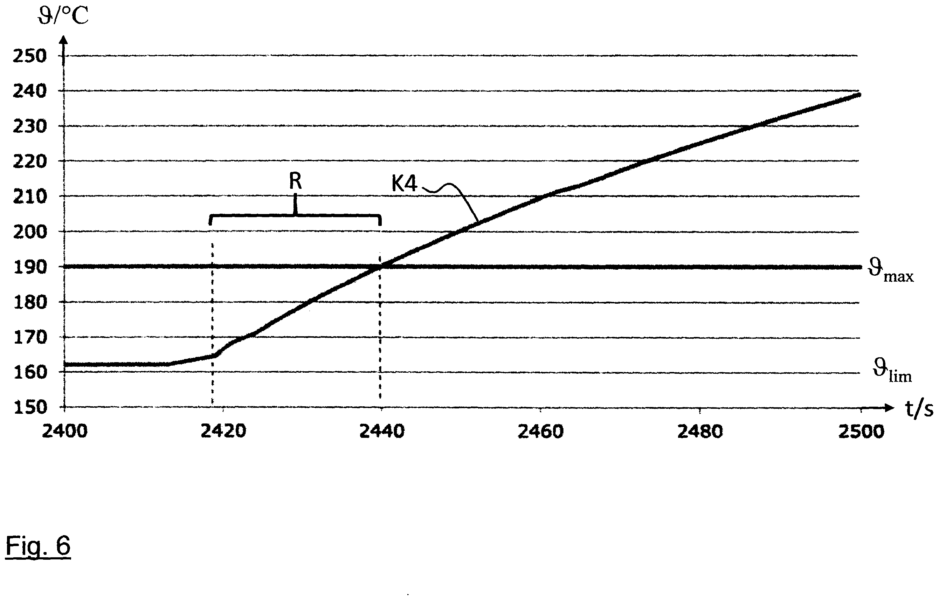

Fig. 5 zeigt einen Sprung des Motorstroms auf 400mA bei einem Elektromotor mit größerem Stator als bei Fig. 4, wobei die Motortemperatur hier (nur) auf ca. 163°C steigt. Anschließend folgt ein Sprung des Motorstroms auf seinen maximalen Wert l_{M,lim}, der hier beispielhaft bei l_{M,lim} = 750mA liegt, wobei die Motortemperatur steil auf einen Wert weit über 200°C ansteigt. Eine Vergrößerung dieses Anstiegs der Wicklungstemperatur K4 ist in Fig. 6 dargestellt. Hier wird deutlich, dass es einen Zeitraum R dauert, bis der Maximalstrom l_{M,lim} die Wicklungen auf die Maximaltemperatur ϑₘₐₓ erwärmt hat. Dieser Zeitraum R beträgt in dem Beispiel der Fig. 6 etwa 20s. Er kann jedoch auch kürzer oder länger sein, je nach Motortyp und Wahl der Maximaltemperatur ϑₘₐₓ. Das bedeutet somit, dass auch der maximale Motorstrom l_{M,lim} durchaus eine gewisse Zeit anliegen darf, ohne dass der Elektromotor unzulässig heiß wird. Allerdings muss eine Abschaltung der Bestromung der Motorwicklungen spätestens nach Ablauf der Zeit erfolgen, um eine Erhitzung auf eine unzulässig Hohe Motortemperatur, d.h. eine Überhitzung zu vermeiden. Der Zeitraum R stellt damit einen Reaktionszeitraum R zur Vornahme einer effektiven Schutzmaßnahme dar.

Erfindungsgemäß wird deshalb ein Verfahren zum Schutz eines Elektromotors insbesondere eines Kreiselpumpenaggregats vor einer Übertemperatur vorgeschlagen, bei dem im Falle eines Fehlers eine Unterbrechung einer Spannungsversorgung durch Öffnen eines Trennmittels erfolgt, wobei der vom Elektromotor aufgenommene Motorstrom und/ oder eine davon abhängige Größe ermittelt und überprüft wird, wobei die Unterbrechung dann erfolgt, wenn der Motorstrom und/ oder die davon abhängige Größe unabhängig von der tatsächlichen Höhe des Motorstroms über einen bestimmten ununterbrochenen Zeitraum oder über eine Summe aus mehreren definierten unterbrochenen Zeiträumen hinweg über einem bestimmten Grenzwert liegt, der kleiner als der elektrisch zulässige maximale Motorstrom oder ein hierzu korrespondierender Wert der vom Motorstrom abhängigen Größe ist.

Erfindungsgemäß wird deshalb auch eine Schaltungsanordnung zum Schutz eines Elektromotors insbesondere eines Kreiselpumpenaggregats vor einer Übertemperatur vorgeschlagen, mit einem Trennmittel zur Unterbrechung einer Spannungsversorgung im Falle eines Fehlers, einem Messmittel zur Bestimmung des vom Elektromotor aufgenommenen Motorstroms und/ oder einer davon abhängige Größe, und einer Steuereinheit zur Überprüfung des Motorstroms oder der davon abhängigen Größe, wobei die Steuereinheit dazu eingerichtet ist, das Trennmittel so anzusteuern, dass die Spannungsversorgung unterbrochen wird, wenn der Motorstrom und/ oder die davon abhängige Größe unabhängig von der tatsächlichen Höhe des Motorstroms über einen bestimmten ununterbrochenen Zeitraum hinweg oder über eine Summe aus mehreren definierten unterbrochenen Zeiträumen hinweg über einem Grenzwert liegt, der kleiner als der zulässige maximale Motorstrom oder ein hierzu korrespondierender Wert der vom Motorstrom abhängigen Größe ist. Sinnvollerweise ist der Grenzwert auch größer als ein Nominalstrom (Nennstrom) des Motors.

Dieses Vorgehen ermöglicht es zu verhindern, dass eine Übertemperatur am Motor entsteht, so dass der Elektromotor den einschlägigen Richtlinien und Normen genügt, ohne dabei einen Temperaturfühler zu verwenden, wobei der Elektromotor gleichzeitig im konstruktiven Aufbau und der Bauteilmontage einfacher ist.

Um einen ausreichend langen Reaktionszeitraum, beispielsweise zwischen 10s und 20s (Fehlertoleranzzeit) zu erreichen, kann der Grenzwert zwischen 10% und 90%, vorzugsweise zwischen 1/3 und 2/3 des maximalen Motorstroms liegen.

Für einen Elektromotor mit einem elektrisch zulässigen maximalen Motorstrom von 750mA kann somit der Grenzwert beispielsweise zwischen 300mA und 400mA liegen. Entsprechendes gilt für die vom Motorstrom abhängige Größe, für die der Grenzwert einem zwischen 1/3 und 2/3 des maximalen Motorstroms entsprechenden Wert sein kann. Vorzugsweise kann der Grenzwert demjenigen größten Motorstrom entsprechen, bei dessen ununterbrochenem Anliegen eine definierter Grenztemperatur ϑₗᵢₘ gerade nicht überschritten wird. Dies kann werksseitig für den Elektromotor ermittelt werden. So würde am Beispiel von Fig. 5 bei einer definierten Grenztemperatur von ϑₗᵢₘ = 160°C der größte Motorstrom, der ununterbrochen anliegen kann, bei oder etwas unterhalb von 400mA liegen, beispielsweise bei 390mA. Entsprechendes kann hier auch wieder für den Grenzwert der vom Motor abhängigen Größe gelten, der einem dem ermittelten größten Motorstrom korrespondierender Wert sein kann.

Durch geeignete Wahl des Reaktionszeitraums bzw. der Summe der einzelnen Zeiträume kann erreicht werden, dass eine maximal zulässige Motortemperatur nicht überschritten wird. Um dies sicherzustellen kann der Zeitraum wie in Fig. 6 veranschaulicht, demjenigen Zeitraum entsprechen oder kleiner als dieser sein, der ausgehend von der Grenztemperatur ϑₗᵢₘ bei Fließen des maximalen Motorstroms vergeht, bis eine zulässige Maximaltemperatur ϑₘₐₓ des Elektromotors erreicht wird bzw. werden würde. Dieser Zeitraum kann werksseitig bei dem Elektromotor ermittelt werden.

Erreicht der Motorstrom bzw. die davon abhängige Größe den Grenzwert, wird erfindungsgemäß schlichtweg unterstellt, dass die Motortemperatur die Grenztemperatur erreicht hat oder zumindest bald erreichen wird. Bleibt der Motorstrom oder die Größe im Bereich des Grenzwerts, so wäre dies grundsätzlich unkritisch, weil ein Motorstrom in Höhe des Grenzwerts selbst bei dauerhaftem Anliegen nicht zu einer kritischen Motortemperatur führt, sondern nur maximal zur Grenztemperatur. Im Falle des Beispiels in Fig. 5 wären hierzu ohnehin auch mehr als 20min erforderlich. Gleichwohl wird selbst bei leichtem Überschreiten des Grenzwerts bereits der erfindungsgemäße Überhitzungsschutz initiiert und führt selbst bei Vorliegen dieses leicht über dem Grenzwert liegendem Motorstroms über den definierten Zeitraum hinweg zu einer Unterbrechung der Spannungsversorgung, weil bei dem erfindungsgemäßen Verfahren die tatsächliche Höhe des Motorstroms unberücksichtigt bleibt. Es spielt somit keine Rolle für die Erfindung, ob der Grenzstrom um 1mA, 10mA oder um 100mA überschritten wird. Somit wird ein Höchstmaß an Sicherheit erreicht.

Um eine besonders einfache Umsetzung der Überwachung des Reaktionszeitraums zu erreichen, kann ein Zähler verwendet werden.

Gemäß einer Ausführungsvariante kann der Zähler ein Aufwärtszähler sein, der erhöht wird, wenn der Motorstrom und/ oder die davon abhängige Größe den Grenzwert überschreitet, wobei die Unterbrechung der Spannungsversorgung dann erfolgt, wenn der Zähler einen Maximalzählerstand erreicht.

Alternativ kann der Zähler ein Abwärtszähler (Countdown) sein, der ausgehend von einem Maximalzählerstand reduziert wird, wenn der Motorstrom und/ oder die davon abhängige Größe den Grenzwert überschreitet, und die Unterbrechung der Spannungsversorgung dann erfolgt, wenn der Zähler den Wert null erreicht.

Soweit die nachfolgend beschriebenen vorteilhaften Weiterbildungen auf den Aufwärtszähler bezogen sind, sei angemerkt, dass erfindungsgemäß ebenso der umgekehrte Wirksinn jeder einzelnen der Weiterbildungen für den Abwärtszähler realisiert sein bzw. werden kann. Ein Erhöhen des Aufwärtszählers entspricht dabei einem Verringern des Abwärtszählers, ein Verringern des Aufwärtszählers einem Erhöhen des Abwärtszählers. Der Maximalzählerstand des Aufwärtszählers würde dem Wert null des Abwärtszählers und der Wert null des Aufwärtszählers dem Maximalzählerstand des Abwärtszählers entsprechen.

Der Zähler kann gemäß einer Ausführungsvariante ein numerischer Zähler sein, der ganzzahlig erhöht oder reduziert wird. Der Zähler kann gemäß einer alternativen Ausführungsvariante aber auch ein rationaler Zähler einer definierten Genauigkeit sein, der in anderen Schritten als ganze Zahlenwerte, beispielsweise in Schritten einer Weite von 0,5 oder 0,1 erhöht oder verringert wird.

Die Erhöhung oder Verringerung des Zählers kann im Rahmen einer zyklischen Abfrage erfolgen, ob der Motorstrom oder die davon abhängige Größe den Grenzwert überschreitet. Die Änderung des Zählers pro Zeiteinheit bzw. pro Zyklus um ein Inkrement oder Dekrement ist damit konstant.

Alternativ kann der Zähler durch das Integral über dem Motorstrom oder der davon abhängigen Größe gebildet sein und berechnet werden, solange der Motorstrom bzw. die Größe über dem Grenzwert liegt. In diesem Fall ist der Zuwachs des Zählers pro Zeiteinheit abhängig von dem Betrag, um den der Motorstrom oder die Größe den Grenzwert überschreitet. Somit erfolgt die Erhöhung des Zählers kontinuierlich, bzw. im Rahmen der definierten Genauigkeit (Anzahl der Nachkommastellen) quasikontinuierlich bis zum Maximalzählerstand.

Der Zähler kann in Hardware oder Software realisiert sein. Software ist hier zu bevorzugen, um keine weiteren Bauteile verwenden zu müssen. Gleichwohl hat eine hardwaretechnische Umsetzung den Vorteil, dass sie besonders zuverlässig, robust und zeitunkritisch ist. Hardwaretechnisch kann der Zähler in analoger oder digitaler Technik umgesetzt sein. Mathematisch betrachtet, stellt der Zähler somit eine Summenbildung oder eine Integration dar, so dass es in der Hard- oder Software durch einen Addierer/ Subtrahierer oder einen Integrator realisiert sein kann. Neben der Erwärmung des Elektromotors ist auch seine Abkühlung zu berücksichtigen. Ist die Motortemperatur zuvor aufgrund eines Motorstroms in Höhe des Grenzwerts oder darüber hinaus auf einen Wert über der Grenztemperatur gestiegen, und verringert sich der Motorstrom dann wieder auf einen geringeren Wert, so fällt auch die Motortemperatur wieder. Dies kann im Falle des Aufwärtszählers erfindungsgemäß dadurch berücksichtigt werden, dass der Zähler verringert wird, wenn der Motorstrom und/ oder die davon abhängige Größe den Grenzwert unterschreitet. Im Falle des Abwärtszählers kann das Abkühlen erfindungsgemäß dadurch berücksichtigt werden, dass der Zähler erhöht wird, wenn der Motorstrom und/ oder die davon abhängige Größe den Grenzwert unterschreitet, insbesondere nur dann erhöht wird, wenn er kleiner als der Maximalzählerstand ist.

Die Verringerung des Aufwärtszählers bzw. Erhöhung des Abwärtszählers muss dabei nicht in derselben Höhe pro Zeiteinheit erfolgen, wie die Erhöhung des Aufwärtszählers bzw. Verringerung des Abwärtszählers, weil auch die Kühlung langsamer erfolgt als die Erwärmung.

So kann also beim Aufwärtszähler die Erhöhung des Zählers pro Zeiteinheit bei der Grenzwertüberschreitung, insbesondere die Inkrementierung pro Zyklus, mit einer höheren Schrittweite erfolgen, als die Verringerung des Zählers pro Zeiteinheit bei der Grenzwertunterschreitung, insbesondere die Dekrementierung pro Zyklus, um eine entsprechende Schrittweite erfolgt. Entsprechend kann beim Abwärtszähler die Verringerung des Zählers X pro Zeiteinheit bei der Grenzwertüberschreitung, insbesondere die Dekrementierung pro Zyklus, mit einer höheren Schrittweite erfolgen, als die Erhöhung des Zählers pro Zeiteinheit bei der Grenzwertunterschreitung, insbesondere die Inkrementierung pro Zyklus, um eine entsprechende Schrittweite erfolgt.

Im Falle eines numerischen Zählers kann dessen Änderung auf einfache Weise dadurch erfolgen, dass der Aufwärtszähler bei jedem Zyklus dekrementiert bzw. der Abwärtszähler inkrementiert wird, wenn der Motorstrom oder die davon abhängige Größe unter dem Grenzwert liegt.

Ist der Zähler als Integral des Motorstroms oder der davon abhängigen Größe realisiert, kann die Integration einfach fortgesetzt werden, wobei sie dann auf die negative Differenz des Motorstroms bzw. der Größe zum Grenzwert ausgeführt wird, so dass sich der Wert des Integrals infolge der Integration wieder verringert. Die Verringerung des Zählers erfolgt sinnvollerweise nur so lange und/ oder so oft, wie der Zähler positiv ist. Denn ein negativer Zähler würde eine Motortemperatur unterhalb der Grenztemperatur implizieren und mithin einen falschen Startwert bilden, wenn der Motorstrom den Grenzwert wieder erreicht. Der Zähler wird somit sinnvollerweise nur dann verringert wird, wenn er größer null ist.

Es kann der Fall eintreten, dass der Motorstrom oder die davon abhängige Größe erneut über den Grenzwert steigt, bevor der Aufwärtszähler den Wert null oder der Abwärtszähler den Maximalwert erreicht. In diesem Fall wird der Aufwärtszähler schlichtweg wieder erhöht bzw. der Abwärtszähler verringert. Somit bildet der aktuelle Zählerwert immer wieder den Startwert für die erfindungsgemäße Temperaturüberwachung. Ein Startwert beim Aufwärtszähler größer null bzw. beim Abwärtszähler kleiner dem Maximalwert bedeutet, dass ein vorheriger Wärmeeintrag infolge des Motorstroms über dem Grenzwert noch nicht wieder vollständig abgebaut ist. Somit wird mit einem dem letzten Zählerstand entsprechenden Startwert auch die thermische Vorgeschichte der Motorwicklungen berücksichtigt.

Es kann der Fall eintreten, dass zwar innerhalb eines einzigen, ununterbrochenen Zeitraums der Maximalzählerstand oder der null noch nicht erreicht wird, jedoch aufgrund des nicht vollständigen Abbaus von Wärmeinträgen zwischen den Zeiträumen der Grenzwertüberschreitung, die Summe der Zählerzuwächse über diese unterbrochenen Zeiträume hinweg zu einer Maximalzählerstandüberschreitung oder die Summe des Zählerabbaus über diese unterbrochenen Zeiträume hinweg zu einer Unterschreitung des Werts null führt.

Wie bereits angesprochen kann die Unterbrechung softwaregesteuert bewirkt werden. Eine Implementierung des erfindungsgemäßen Verfahrens kann in der Motorsteuerung erfolgen, die ohnehin zur Drehzahlstellung und/ oder -regelung des Elektromotors vorhanden ist. Dies hat den Vorteil, dass keine zusätzliche Hardware zur Umsetzung des Verfahrens erforderlich ist. Der Vergleich des Motorstroms und/ oder der davon abhängigen Größe mit dem Grenzwert kann in der Software zyklisch ausgeführt werden. Ein Zyklus kann beispielsweise alle 10ms bis 250ms, vorzugsweise alle 50ms oder 100ms durchgeführt bzw. wiederholt werden. Der Zähler wird dann in Abhängigkeit des Vergleichsergebnisses inkrementiert oder dekrementiert.

Um zu berücksichtigen, dass der Elektromotor unterschiedliche Erwärmungs- und Abkühlungsraten besitzt, kann die Erhöhung des Aufwärtszählers pro Zeiteinheit, insbesondere die Inkrementierung pro Zyklus, mit einer höheren Schrittweite erfolgen, als die Verringerung des Aufwärtszählers pro Zeiteinheit, insbesondere die Dekrementierung pro Zyklus. Ferner kann die Verringerung des Abwärtszählers pro Zeiteinheit, insbesondere die Dekrementierung pro Zyklus, mit einer höheren Schrittweite erfolgen, als die Erhöhung des Abwärtszählers pro Zeiteinheit, insbesondere die Inkrementierung pro Zyklus.

Bevorzugt kann die Unterbrechung der Spannungsversorgung zum Elektromotor erst dann wieder aufgehoben werden, wenn der Zähler im Falle eines Aufwärtszählers unterhalb einem prozentualen Betrag des Maximalzählerstands oder im Falle eines Abwärtszählers oberhalb einem prozentualen Betrag des Maximalzählerstands liegt. Gemäß dieser Weiterbildung ist somit vorgesehen, dass eine Abschaltung der Spannungsversorgung bzw. ein Stromlosschalten der Motorwicklungen reversible ist und somit nicht zur dauerhaften Unbenutzbarkeit des Elektromotors führt. Vielmehr ist vorgesehen, dass der Elektromotor wieder zum Laufen gebracht werden kann oder selbst wieder anläuft, wenn die Motorwicklungen auf einen bestimmten Wert abgekühlt ist. Physikalisch wird hierdurch eine Hysterese erreicht.

Der prozentuale Betrag des maximalen Zählerstands kann beispielsweise zwischen 30% und 80% vorzugsweise bei etwa oder mindestens 50% oder zwischen 50% und 70% liegen. Diese Weiterbildung bringt auch zum Ausdruck, dass die Überwachung der Motortemperatur und Berechnung des Zählers auch nach der Unterbrechung der Spannungsversorgung fortgesetzt wird.

Gemäß einer Ausführungsvariante kann der Zählerstand in einem nicht-flüchtigen Speicher gespeichert werden. Dies hat den Vorteil, dass er jederzeit verwendet werden kann, wenn er benötigt wird, insbesondere auch nach einem manuellen oder automatischen Abschalten des Elektromotors infolge eines Fehlers. Somit kann der Zähler auch während der Unterbrechung der Spannungsversorgung weiterlaufen. Anderenfalls würde durch Abschalten der Stromversorgung der Motorelektronik auch das "Gedächtnis" des Zählers gelöscht. Vorzugsweise kann der gespeicherte Zählerstand als Startwert für den Zähler verwendet werden, wenn die Spannungsversorgung zum Elektromotor hergestellt, insbesondere wiederhergestellt wird. Wäre z.B. der Elektromotor kurz vor Erreichen des maximalen Zählerstandes vom Netz getrennt worden, so würde beim nächsten Anlauf der Zähler bei null beginnen, obwohl der Motor beim Wiederanlauf noch eine signifikante Erwärmung haben kann. Dies wird durch die Verwendung des gespeicherten Zählerstands als Startwert für den Zähler vermieden.

Wie bereits zuvor ausgeführt, ist der Reaktionszeitraum R vorzugsweise so zu wählen, dass in ihm die aus Sicht des Schutzes eines Nutzers gegen Verbrennung maximal zulässige Motortemperatur ϑₘₐₓ nicht überschritten wird. Da sich der Reaktionszeitraum R in der Höhe der Zählerstands wiederspiegelt, sollte der Maximalzählerstand demjenigen Zeitraum entsprechen oder kleiner als jener Zeitraum sein, der ausgehend von der Grenztemperatur ϑₗᵢₘ bei Fließen des maximalen Motorstroms vergeht, bis die zulässige Maximaltemperatur ϑₘₐₓ des Elektromotors erreicht werden würde.

Gemäß einer Ausführungsvariante kann das Trennmittel ein elektromechanischer Schalter, insbesondere ein Trennrelais sein, wobei die Unterbrechung der Spannungsversorgung durch Öffnen dieses elektromechanischen Schalters bewirkt wird. Dieser ist vor allem dann geeignet, wenn höhere Ströme oder Spannungen geschaltet werden müssen. Alternativ zum elektromechanischen Schalter kann auch ein elektronischer Halbleiterschalter, insbesondere ein leistungselektronischer Schalter wie ein IGBT oder IGCT verwendet werden.

Über den Schalter kann in seinem geschlossenen Zustand Strom von einer Netzspannungsversorgung zum Elektromotor fließen. Der elektromechanische Schalter kann im Eingangskreis des Elektromotors, d.h. vor einem Drehzahlsteller und unmittelbar hinter der Netzspannungsversorgung angeordnet sein, so dass die gesamte Motorelektronik durch das Unterbrechen der Spannungsversorgung, hier der Netzspannungsversorgung, stromlos ist bzw. wird. Alternativ kann der elektromechanische Schalter zwischen einem Gleichspannungszwischenkreis und einem Wechselrichter des Drehzahlstellers angeordnet sein, so dass durch das Öffnen des Schalters die Spannungsversorgung, hier die Gleichspannungsversorgung des Zwischenkreises, von den Motorwicklungen getrennt wird. Die Motorelektronik bleibt dabei im Übrigen elektrisch versorgt.

Gemäß einer anderen Ausführungsvariante, kann das Trennmittel eine elektronische Schalteinrichtung sein, insbesondere zumindest ein steuerbarer Halbleiterschalter, beispielsweise ein Transistor sein, wobei die Unterbrechung der Spannungsversorgung durch Öffnen dieser Schalteinrichtung bewirkt wird. Sie ist vor allem dann geeignet, wenn niedrigere Ströme oder Spannungen geschaltet werden sollen. Somit ist das Trennmittel sinnvoll dimensioniert.

Vorzugsweise bewirkt die elektronische Schalteinrichtung eine Unterbrechung der Spannungsversorgung zum Elektromotor durch eine Unterbrechung der Versorgungsspannung (VDD) zu der Treiberschaltung eines den Elektromotor im Normalbetrieb speisenden Wechselrichters. Denn bei fehlender Versorgungsspannung werden die Halbleiterschalter des Wechselrichters nicht mehr von der Treiberschaltung angesteuert und bleiben somit ausgeschaltet. Somit ist auch dies eine Möglichkeit, die Motorwicklungen stromlos zu schalten. Im geschlossenen Zustand der Schalteinrichtung ist die Treiberschaltung dagegen bestimmungsgemäß mit der Versorgungsspannung (VDD), insbesondere einer Niederspannungsversorgung verbunden. Da hier nur minimale Leistungen im Vergleich zum Trennrelais geschaltet werden, können die zum Schalten benötigen Bauelemente besonderes klein dimensioniert sein und benötigen dementsprechend nur einen geringen Bauraum.

Idealerweise ist die elektronische Schalteinrichtung durch zwei in Reihe liegende Einzelschalter, insbesondere zwei Halbleiterschalter wie Transistoren realisiert, die durch ein gemeinsames Steuersignal angesteuert werden bzw. angesteuert sind. Dies verhindert das Risiko, dass aufgrund eines Defekts, beispielsweise einem Kurzschluss in einem der Bauteile, keine Unterbrechung der Spannungsversorgung möglich ist. Durch die zwei Einzelschalter ist Redundanz geschaffen.

Geeigneterweise sollte der Motorstrom und/ oder die davon abhängige Größe in jedem Betriebsmodus und nicht nur im Normalbetrieb, insbesondere auch in einem Betriebsbereitschaftsmodus des Elektromotors ermittelt und überprüft werden, damit auch im Stillstand des Motors bestimmte Fehler, wie beispielsweise ein zerstörter Halbleiterschalter im Wechselrichter, erkannt werden können.

Beispielsweise kann vorgesehen sein, dass wenn der Motorstrom und/ oder die davon abhängige Größe im Betriebsbereitschaftsmodus einen Bereitschaftsgrenzwert überschreitet, Halbeiterschalter des den Elektromotor im Normalbetrieb speisenden Wechselrichters sequenziell einzeln eingeschaltet werden. Dies ermöglicht es, einen defekten Halbleiterschalter zu erkennen. Denn ein Defekt an einem Halbleiterschalter äußert sich in der Regel in einem Kurschluss zwischen seinen Leitungsanschlüssen (Emitter-Kollektor oder Drain-Source). Durch ein sequenzielles, d.h. einzelnes Einschalten der Halbleiterschalter nacheinander wird geprüft, ob sich über eine der Vollbrücken ein Kurzschluss ergibt. Dies ist dann der Fall, wenn zusätzlich zu dem defekten Halbleiterschalter in einer Halbbrücke einer Vollbrücke der andere Halbleiterschalter in der anderen Halbbrücke der Vollbrücke in den leitenden Zustand versetzt wird. Hierdurch wird die Zwischenkreisspannung über diese beiden Halbbrücken kurzgeschlossen. Es fließt infolgedessen ein Kurzschlussstrom, der entweder eine Sicherung durchbrennen lässt ("Selbstzerstörung") oder die erfindungsgemäße Zählerberechnung auslöst, welche dann nach entsprechender Zeit die Notabschaltung wegen Übertemperatur einleitet, sofern der Kurzschluss bleibt.

Gemäß einer Ausführungsvariante kann der Motorstrom gemessen werden. Dabei sei angemerkt, dass eine direkte Messung des Stroms selbst physikalisch nicht möglich ist. Eine Messung des Stroms erfolgt stets über eine Hilfsgröße, wie dem Spannungsabfall an einem von dem zu messenden Strom durchflossenen Widerstand, oder das magnetische Feld, das um den von dem zu messenden Strom durchflossenen Leiter erzeugt wird. Vorzugsweise wird auch bei dem erfindungsgemäßen Verfahren der Motorstrom aus dem Spannungsabfall an einem Messwiderstand, insbesondere einem Shunt gemessen. Alternativ kann auch ein Kohlewiderstand verwendet werden, jedoch ist ein Shunt aufgrund der geringen Toleranz und der Beständigkeit seiner Eigenschaft (kein Drift) zu bevorzugen. Dieser Messwiderstand ist Teil der erfindungsgemäßen Messmittel und liegt geeigneterweise in Reihe mit dem den Elektromotor im Normalbetrieb speisenden Wechselrichter.

Gemäß einer Ausführungsvariante kann ein einziger Messwiderstand verwendet werden, über den alle drei Motorphasenströme fließen. Dies führt zu einem minimalen Bauraumbedarf in der Motorelektronik. Der Messwiderstand kann vor dem Wechselrichter liegen und somit mit dem oberen Zwischenkreispotenzial verbunden sein, oder hinter dem Wechselrichter liegen und mit Masse verbunden sein.

Es ist gemäß einer alternativen Ausführungsvariante auch möglich, mehr als einen Messwiderstand, insbesondere mehr als einen Shunt, zu verwenden. Diese können gemäß einer Variante parallel oder in Reihe geschaltet sein. Eine Reihenschaltung, durch die alle drei Motorphasenströme fließen, hat hier den Vorteil, dass jeder der in Reihe liegenden Messwiderstände eine eigene Messspannung liefert, die verarbeitet werden kann. Somit ist die Gefahr minimiert, dass bei Verwendung eines einzigen Messwiderstands ein metallischer Fremdkörper wie beispielsweise ein Metallspan, den Messwiderstand überbrückt und dadurch keine Spannung gemessen wird, obwohl ein Strom fließt. Gemäß einer anderen Variante kann jeder Motorphase ein eigener Messwiderstand, insbesondere Shunt zugeordnet sein, so dass durch jeden Messwiderstand nur der Motorstrom der entsprechenden Phase zu Masse fließt. Somit liegen auch entsprechend der Anzahl Messwiderstände mehrere Messspannungen vor, die jeweils getrennt voneinander entsprechend der erfindungsgemäßen Verfahrensweise verarbeitet werden können.

Der Wert eines Messwiderstands, insbesondere eines Shunts ist in der Regel bekannt. Der Motorstrom ergibt sich dann nach dem ohmschen Gesetz, indem der gemessene Spannungsabfall durch den Widerstandswert geteilt wird. Besitzt der Messwiderstand beispielsweise einen Widerstandswert von 1Ω, folgt aus einem Spannungsabfall von 400mV ein Motorstrom von 400mA. Vorzugsweise wird jedoch ein sehr kleiner Messwiderstand, insbesondere von weniger als 1Ωverwendet, um die ohmschen Verluste (Wärme) minimal zu halten.

Für die Durchführung des erfindungsgemäßen Verfahren ist aber nicht erforderlich, den Spannungsabfall am Messwiderstand durch den Widerstandswert zu teilen, um so einen entsprechenden Stromwert zu erhalten, weil es auf den tatsächlichen Motorstrom nicht ankommt. So kann auch mit dem Wert des Spannungsabfalls am Messwiderstand selbst gerechnet werden, der die zuvor mehrfach genannte, vom Motorstrom abhängige Größe darstellt, weil er proportional zum Motorstrom ist.

Gemäß einer bevorzugten Ausführungsvariante kann der Motorstrom und/ oder die davon abhängige Größe über einen ersten Signalpfad zum Erhalt eines ersten Messwerts und gleichzeitig über einen zweiten Signalpfad zum Erhalt eines zweiten Messwerts ermittelt werden, wobei der eine der beiden Messwerte gegenüber dem anderen Messwert invertiert ist. Der erste und zweite Signalpfad sind vorzugsweise Teil des Messmittels. Die zwei Signalpfade bewirken zum einen Redundanz, zum anderen kann aufgrund der Invertierung des einen der beiden Messwerte die Validität bzw. Richtigkeit beider Messwerte festgestellt werden. Beispielsweise kann ein Vergleich des ersten und zweiten Messwerts miteinander durchgeführt werden und die Unterbrechung der Spannungsversorgung bewirkt werden, wenn die Messsignale nicht zueinander invertiert sind. Denn in diesem Fall liegt in einem der beiden Signalpfade ein Fehler vor, so dass nicht mehr sichergestellt ist, dass die erfindungsgemäße Temperaturüberwachung korrekt arbeitet.

Gemäß einer vorteilhaften Weiterbildung kann der zweite Signalpfad eine Einrichtung zur Zeitintervall-bezogenen Maximalwertbestimmung des Motorstroms und/ oder der davon abhängigen Größe umfassen, respektive der zweite Messwert einen Zeitintervall-bezogenen Maximalwert des Motorstroms und/ oder der davon abhängigen Größe darstellen. Hierdurch wird für jedes Zeitintervall, beispielsweise einer Länge zwischen 50ms und 500ms, vorzugsweise von 100ms, der jeweils vorkommende Spitzenwert des Motorstroms bzw. der Größe ermittelt und dieser Spitzenwert als analoger Messwert für das entsprechende Zeitintervall verwendet. Durch diese Zeitintervall-bezogene Maximalwertbestimmung wird vermieden, dass aufgrund eines Taktfehlers bei der Verarbeitung insbesondere beim Sampeln des sich schnell ändernden ersten Messwerts ein geringerer als der tatsächlich vorliegende Motorstrom ermittelt wird, so dass ausgeschlossen werden kann, dass aufgrund eines solchen Taktfehlers eine Überhitzung des Motors unerkannt bleibt.

Um die Robustheit des Verfahrens zu verbessern, kann eine Filterung, insbesondere eine gleitende Mittelwertbildung beim ersten und/ oder zweiten Messwerts über einen Filterungszeitraum durchgeführt werden. Spannungsspitzen werden hierdurch rausgefiltert, da diese ohnehin keinen Wärmeeintrag in den Elektromotor liefern.

Geeigneterweise werden die beiden Messwerte abgespeichert, um einen Vergleich zwischen ihnen zu ermöglichen. Standardmäßig kann vorgesehen sein, dass der Messwert des ersten Signalpfades für die erfindungsgemäße Temperaturüberwachung verwendet wird.

Vorzugsweise wird ein Vergleich des ersten und zweiten Messwerts miteinander durchgeführt, so dass abnormale, auf einen Fehler hinweisende Unterschiede erkannt werden können. Denn in der Regel sollten die beiden Messwerte im Wesentlichen gleich sein. Eine betragliche Abweichung würde dagegen auf einen Fehler hindeuten. Wird allerdings im zweiten Signalpfad der Zeitintervall-bezogene Maximalwert des Motorstroms und/ oder der davon abhängigen Größe als Messwert ermittelt, so führt dies automatisch zu einer betraglichen Abweichung der Messwerte. Um hier sicherzustellen, dass keine Übertemperatur unerkannt bleibt, ist es sinnvoll, wenn immer der höhere der beiden Messwerte als Motorstrom und/ oder als die davon abhängige Größe verwendet wird.

Wegen der Verwendung des Zeitintervall-bezogene Maximalwerts des Motorstroms und/ oder der davon abhängigen Größe als Messwert im zweiten Signalpfad, deutet allein eine betragliche Abweichung der Messwerte noch nicht auf einen Fehler hin. Auf einen Fehler in der Messsignalverarbeitung kann jedoch geschlossen werden, wenn die Abweichung eine bestimmte Toleranz überschreitet, insbesondere größer als 10%, vorzugsweise größer 15% ist.

Gemäß einer Weiterbildung kann vorgesehen werden, dass auf einen Fehler in der Messsignalverarbeitung nur dann geschlossen wird, wenn die Toleranz über einen festgelegten Beobachtungszeitraum hinweg überschritten bleibt. Der Beobachtungszeitraum kann zwischen 0,5s und 2s, vorzugsweise 1s betragen.

Gemäß einer bevorzugten Ausführungsvariante kann zur Ansteuerung des Trennmittels eine monostabile Kippstufe verwendet werden, die im fehlerfreien Betrieb des Elektromotors zyklisch, insbesondere von der Steuereinheit, getriggert wird, so dass der Ausgang der Kippstufe ein konstantes Steuersignal ausgibt, um das Trennmittel im geschlossenen Zustand zu halten. Die Unterbrechung der Spannungsversorgung kann dann dadurch bewirkt werden, dass die Triggerung der Kippstufe ausgesetzt wird. Bezogen auf die erfindungsgemäße Schaltungsanordnung kann diese die genannte, das Trennmittel steuernde monostabile Kippstufe umfassen, die von einem Steuersignal der Steuereinheit triggerbar ist, wobei die Steuereinheit eingerichtet ist, die Kippstufe im fehlerfreien Betrieb des Elektromotors zyklisch zu triggern, und die Kippstufe eingerichtet ist, durch die zyklische Triggerung ein konstantes Steuersignal auszugeben, um das Trennmittel im geschlossenen Zustand zu halten. Ferner ist die Steuereinheit entsprechend ausgebildet, die zyklische Triggerung auszusetzen, wenn der Motorstrom und/ oder die davon abhängige Größe über einen oder mehrere Zeiträume hinweg über dem Grenzwert liegt. Durch diese verfahrensgemäße bzw. vorrichtungsgemäße Weiterbildung wird eine Totmannschaltung realisiert, durch die die Spannungsversorgung zum Elektromotor nur dann aufrechterhalten bleibt, wenn kein Fehler vorliegt, d.h. die Kippstufe immer wieder getriggert wird. Wird eine Übertemperatur erkannt, kann diese Triggerung bewusst ausgesetzt werden. Selbiges kann jedoch bei jedem anderen Fehler ebenfalls bewusst oder automatisch erfolgen. Kommt es beispielsweise zu einem Fehler in der Software, durch welchen diese nicht mehr reagiert und "festhängt", bleibt die Triggerung aus, so dass ebenfalls eine Sicherheitstrennung der Spannungsversorgung durch die monostabile Kippstufe und das Trennelement erreicht wird.

Des Weiteren ist die erfindungsgemäße Schaltungsanordnung zur Durchführung des zuvor beschriebenen Verfahrens eingerichtet.

Die Erfindung betrifft schließlich auch einen Elektromotor mit einer Motorelektronik umfassend eine erfindungsgemäße Schaltungsanordnung. Vorzugsweise ist der Elektromotor Teil eines Kreiselpumpenaggregats, insbesondere eines Heizungsumwälzpumpenaggregats. Dabei kann der Elektromotor als Nassläufer ausgebildet sein.

Weitere Merkmale und Vorteile der Erfindung werden nachfolgend anhand von Ausführungsbeispielen unter Bezugnahme auf die beigefügten Figuren erläutert. Es zeigen:
Fig. 1: eine Anordnung zum Schutz vor Übertemperatur nach dem Stand der Technik
Fig. 2: eine Anordnung zum Schutz vor Übertemperatur nach einer ersten Variante der Erfindung
Fig. 3: eine Anordnung zum Schutz vor Übertemperatur nach einer zweiten Variante der Erfindung
Fig. 4: die Wicklungstemperatur in Abhängigkeit des Motorstroms bei drei Stromsprüngen
Fig. 5: die Wicklungstemperatur in Abhängigkeit des Motorstroms bei einem vierten Stromsprung
Fig. 6: eine Vergrößerung eines Ausschnitts der Fig. 5 beim Stromsprung
Fig. 7: einen Zählerverlauf in Abhängigkeit der Motortemperatur
Fig. 8: ein Ablaufdiagramm zur einer Variante des erfindungsgemäßen Verfahrens
Fig. 9: ein Ablaufdiagramm zur anderen Variante des erfindungsgemäßen Verfahrens
Fig.10: eine Anordnung zum Schutz vor Übertemperatur nach einer dritten Variante der Erfindung

Figur 1 zeigt einen Elektromotor 1 samt Elektronik nach dem Stand der Technik, in der ein Schutz gegen eine Übertemperatur in den Motorwicklungen 1a realisiert ist. Der Elektromotor 1 ist über einen Drehzahlsteller 3, der hier in Gestalt eines Frequenzumrichters ausgeführt ist, sowie über weitere Bauteile 12, 13, 8 mit einer Netzspannungsversorgung 11 verbunden. Der Drehzahlsteller 3 umfasst einen Gleichrichter 4, einen Spannungszwischenkreis 5 und einen Wechselrichter 6, die in bekannter Weise hintereinandergeschaltet sind, wobei der Wechselrichter 6 aus der Zwischenkreisspannung 3 Phasenspannungen für die Motorwicklungen 1a erzeugt, die hier rein beispielhaft im Dreieck geschaltet sind.

Dem Drehzahlsteller 3 vorgeschaltet ist ein Störungsfilter 8, beispielsweise eine PFC (Power Factor Control) zur Filterung von Oberwellen, eine Einschaltstrombegrenzung 13, beispielsweise in Gestalt eines PTC (Positive Temperature Coefficient) und eine Sicherung 12. Die Sicherung 12, die Einschaltstrombegrenzung 13 und der Störungsfilter 8 liegen in Reihe und verbinden die Netzspannungsversorgung 11 mit dem Drehzahlsteller 3. Parallel zur Einschaltstrombegrenzung 13 ist ein Trennmittel in Gestalt eines Trennrelais 14 angeordnet, das bestimmungsgemäß nach dem Verbinden des Elektromotors 1 mit der Netzspannungsversorgung 11 die Einschaltstrombegrenzung 13 überbrückt.

Die Motorelektronik umfasst des Weiteren eine Steuereinheit 10, die auf der Grundlage der gemessenen Zwischenkreisspannung, welche ihr über die Messleitung 25 zugeführt wird, und des Motorstroms, der über Messmittel 7 im Zwischenkreis gemessen und über eine Messleitung 26 zugeführt wird, PWM-Steuersignale (PWM, Puls-Weiten-Modulation) generiert und diese über eine PWM-Steuerleitung 18 an den Wechselrichter 6 leitet, welcher entsprechend der PWM-Steuersignale seine Halbleiterschalter ein- und ausschaltet, um die Phasenspannungen zu erzeugen. Die Steuereinheit 10 realisiert hierbei auch eine Drehzahlregelung des Elektromotors 1.

Zur Bereitstellung einer Versorgungsspannung für die verschiedenen Bauteile der Motorelektronik ist eine Niederspannungsversorgung 9 vorgesehen, die hier beispielshaft aus dem Zwischenkreis 5 versorgt wird und die zumindest eine Versorgungsspannung bereitstellt, welche über Versorgungsleitungen 20, 21, 22 zu den verschiedenen Bauteilen geleitet wird.

Zur Temperaturüberwachung des Elektronmotors 1 ist zwischen den Motorwicklungen 1a ein Temperaturfühler 2 in Gestalt eines PTC oder PT1000 vorhanden, dessen Sensorsignal über eine Steuerleitung 23 direkt das Trennrelais 14 ansteuert. Dies bedeutet, dass der Wert des Sensorsignals direkten Einfluss darauf hat, ob das Trennrelais 14 geöffnet oder geschlossen ist. Im Normalzustand gibt der Temperaturfühler 2 beispielsweise einen Spannungswert aus, das das Trennrelais 14 im Normalzustand geschlossen hält.

Da in der Motorelektronik oder im Motor 1 selbst noch andere Fehler auftreten können, auf die mit einer Abschaltung der Netzspannungsversorgung 11 reagiert werden muss oder sollte, ist auch die Steuereinheit 10 über eine entsprechende Steuerleitung 19 mit dem Trennrelais 14 verbunden. Auch hier ist das entsprechende Steuersignal im Normalfall ein Spannungssignal, das das Trennrelais 14 im Normalzustand geschlossen hält.

Um nun in beiden Fällen, d.h. im Falle einer Übertemperatur, die vom Temperaturfühler 2 gemeldet wird, als auch im Falle eines anderen Fehlers, der von der Steuereinheit 10 gemeldet wird, das Trennrelais 14 zu öffnen, sind die beiden Steuerleitungen 19, 23 über ein UND-Gatter 15 miteinander verknüpft, wobei der Ausgang des UND-Gatters 15 über eine entsprechende Schaltleitung 27 mit dem Steuereingang des Trennrelais 14 verbunden ist. Alternativ kann das UND-Gatter 15 auch durch eine logische UND-Verknüpfung gebildet sein. So kann z.B. die Steuereinheit 10 einen Low-Side-Switch für das Relais 14 ansteuern, während der PTC 2 einen High-Side-Switch ansteuert, so dass das Relais nur wenn beide geschlossen sind, schaltet.

Bei der Ausführungsvariante gemäß Figur 1 ist die Motortemperaturüberwachung ausschließlich in Hardware realisiert. Weder in der Steuereinheit 10 noch in einem anderen Bauteil sind Softwarekomponenten vorhanden, die im Falle einer Übertemperatur ein Stromlosschalten der Motorwicklungen 1a, d.h. eine Unterbrechung der Spannungsversorgung zum Elektromotor 1 bewirken. Da für den Temperaturfühler 2 innerhalb des die Wicklungen 1a aufnehmenden Stators ein entsprechender Bauraum vorhanden sein muss, in dem der Temperaturfühler 2 in guter thermischer Anbindung an die Motorwicklungen 1a angeordnet werden muss, ist der Aufbau und die Montage des Elektromotors 1 samt Temperaturfühler 2 vergleichsweise kompliziert. Zudem führt die Notwendigkeit des Temperaturfühlers 2 zu zusätzlichen Kosten.

Figur 2 zeigt nunmehr eine erste erfindungsgemäße Ausführungsvariante mit einer softwaregesteuerten Übertemperaturabschaltung des Elektromotors 1. Durch die Erfindung kann der Temperaturfühler 2 entfallen, was folgemäßig auch für die Versorgungsleitung 22 und die Steuerleitung 23 gilt, die zuvor mit dem Temperaturfühler 2 verbunden waren.

Erfindungsgemäß ist vorgesehen, dass die Steuereinheit 10 durch eine Motortemperatur-Überwachungseinheit 16 ergänzt wird, die eine Notabschaltung der Spannungsversorgung zum Elektromotor 1 bei einer drohenden Übertemperatur in den Motorwicklungen 1a auslöst. Hierzu bedient sie sich des bereits zur Steuerung des Wechselrichters 6 vorhandenen Motorstrommesswerts, aus dem, bzw. aus dessen Verlauf die Motortemperatur-Überwachungseinheit 16 die Motortemperatur bzw. die Wicklungstemperatur rein qualitativ abschätzt. Dies wird nachfolgend erläutert. Eine konkrete Berechnung der Motortemperatur ist dabei nicht erforderlich und wird folgemäßig auch nicht durchgeführt.

Eine festgestellte Übertemperatur wird so behandelt, so dass von der Steuereinheit 10 über die Steuerleitung 19 ein entsprechendes Signal an das Trennrelais 14 gegeben wird, welches das Trennrelais 14 folgemäßig öffnet und die Spannungsversorgung von der Netzspannungsversorgung 11 zum Elektromotor 1 unterbricht, so dass die Motorwicklungen 1a stromlos werden.

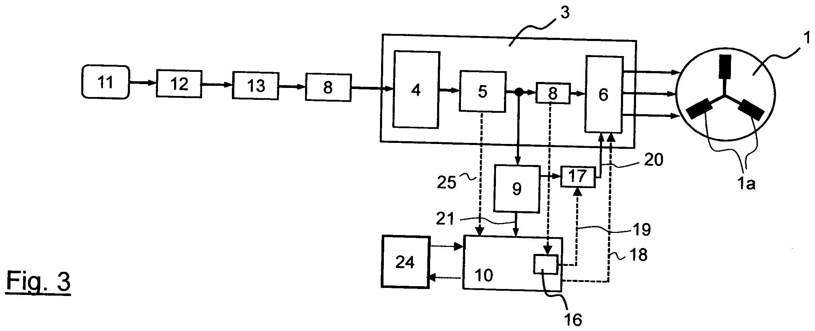

Eine andere Ausführungsvariante einer erfindungsgemäßen Schaltungsanordnung ist in Figur 3 dargestellt. Diese unterscheidet sich von der ersten Ausführungsvariante darin, dass nicht die Netzspannungsversorgung 11 vom Elektromotor 1 bzw. Drehzahlsteller 3 direkt getrennt wird, sondern die Versorgungsspannung (VDD), die von der Niederspannungsversorgung 9 dem Wechselrichter 6, genauer gesagt einer Treiberschaltung 6a des Wechselrichters 6, bereitgestellt wird. Hierdurch folgt ebenfalls, dass die Spannungsversorgung zum Elektromotor unterbrochen wird, allerdings indirekt. Zu diesem Zweck ist ein Trennmittel 17 in Gestalt einer elektronischen Schalteinrichtung zwischen der Niederspannungsversorgung 9 und dem Wechselrichter 6, respektive dessen Treiberschaltung 6a, vorhanden, welche von der Steuereinheit 10, insbesondere der Motortemperatur-Überwachungseinheit 16 angesteuert wird. In dieser Ausführungsvariante kann somit auf das Trennrelais 14 verzichtet werden, was in der Motorelektronik entsprechenden Bauraum schafft und diese somit kompakter und preiswerter hergestellt werden kann.

Figur 3 zeigt zudem eine optionale Weiterbildung der ersten Ausführungsvariante dahingehend, dass ein nicht-flüchtiger Speicher 24, beispielsweise in Gestalt eines EEPROMS, mit der Steuereinheit 10 in Verbindung steht, um Werte abzuspeichern, die im Rahmen der Motortemperaturüberwachung erzeugt oder verarbeitet werden, wie nachfolgend noch erläutert wird. Die Steuereinheit 10 kann beispielsweise ein Mikrocontroller sein.

Figur 4 stellt die Verläufe von vier Kurven K1, K2, K3, K4 über der Zeit dar, die zu einem ersten Elektromotor 1 gehören. Dabei zeigt die Kurve K1 die Umgebungstemperatur, die Kurve K2 die Temperatur eines Mediums, das von einer vom Elektromotor 1 angetriebenen Kreiselpumpe gefördert wird und den nasslaufenden Rotorraum des Elektromotors 1 durchströmt, die Kurve K3 den Verlauf des Motorstroms l_{M} und die Kurve K4 die Motorwicklungstemperatur ϑ. Während die Umgebungstemperatur K1 um ca. 70°C schwankt und die Mediumtemperatur zwischen 107°C und 110°C liegt, erreicht die Motorwicklungstemperatur 9 in der Kurve K4 aufgrund des Motorstroms l_{M} eine Temperatur von fast 190°C. Der Motorstrom l_{M} wird hier mehrmals sprunghaft erhöht, um das Temperaturverhalten zu untersuchen, wobei ein erster Sprung auf 250mA, ein zweiter Sprung auf 300mA und ein dritter Sprung auf 350mA vorgenommen wurde. Wie die Kurve K4 zeigt, nähert sich die Temperatur bei jedem Sprung nach einem exponentiellen Anstieg asymptotisch einer bestimmten lokalen Maximaltemperatur. Diese liegt bei 250mA bei etwa 143°C, bei 300mA bei etwa 162°C und bei 350mA bei etwa 188°C. Diese lokalen Maximaltemperaturen sind somit charakteristisch für jeweils einen der eingestellten Motorströme bei dem ersten Elektromotor 1.

In Figur 5 ist die Stromkurve K3 für einen zweiten Elektromotor 1 mit größerem Stator als beim ersten Elektromotor gezeigt. Hier wird zunächst ein Motorstrom in Höhe von 400mA, anschließend in Höhe von 750mA, eingestellt wobei dieser Strom dem maximalen elektrischen Motorstrom l_{M,max} dieses zweiten Elektromotors 1 entspricht. Die Temperaturkurve K4 zeigt, dass bei 400mA die Motorwicklungstemperatur auf knapp über 160°C ansteigt, etwa bei 163°C liegt, wohingegen der Maximalstrom zu einem steilen Anstieg der Motortemperatur weit über 200°C führt. Eine Vergrößerung dieses Anstiegs ist in Figur 6 dargestellt.

Figur 6 zeigt, dass eine bestimmte Maximaltemperatur ϑₘₐₓ definiert und ausgehend von einer zuvor festgelegten Grenztemperatur ϑₗᵢₘ ermittelt werden kann, wie lange es dauert, bis bei vorliegendem Maximalstrom l_{M,max} die Maximaltemperatur ϑₘₐₓ erreicht wird. Der hierfür benötigte Zeitraum R ist in Figur 6 angedeutet und stellt den Reaktionszeitraum für eine rechtzeitige Notabschaltung der Spannungsversorgung in Folge drohender Übertemperatur dar. Als Maximaltemperatur ϑₘₐₓ wurde hier in Einstimmung mit den einschlägigen Normen (z.B. IEC60335, Kapitel 19, Schutzklasse 155(F)) eine Temperatur von ϑₘₐₓ = 180°C festgelegt. Zudem wurde eine Grenztemperatur ϑₗᵢₘ = 160°C festgelegt, ab der eine kritische Beobachtung der Motortemperatur erfolgen soll. Diese Beobachtung erfolgt erfindungsgemäß jedoch nicht direkt in Gestalt der Motortemperatur selbst, sondern in Gestalt einer Beobachtung des Motorstroms l_{M,}da jeder Motorstromwert, wie Figuren 4 und 5 zeigen, jeweils einer bestimmten Motorwicklungstemperatur ϑ zugeordnet ist. So ist auch der definierten Grenztemperatur ϑₗᵢₘ=160°C ein bestimmter Grenzstrom l_{M,lim} von etwa 300mA beim ersten Elektromotor 1, vgl. Fig. 4, und von 400mA beim zweiten Elektromotor 1, vgl. Figur 5, bzw. etwas darunter liegend (ca. 380mA), zugeordnet, ab dem anstelle der Grenztemperatur ϑₗᵢₘ eine kritische Beobachtung des Motorstroms l_{M} erfolgen soll. Dies wird erfindungsgemäß durch einen Zähler X realisiert.

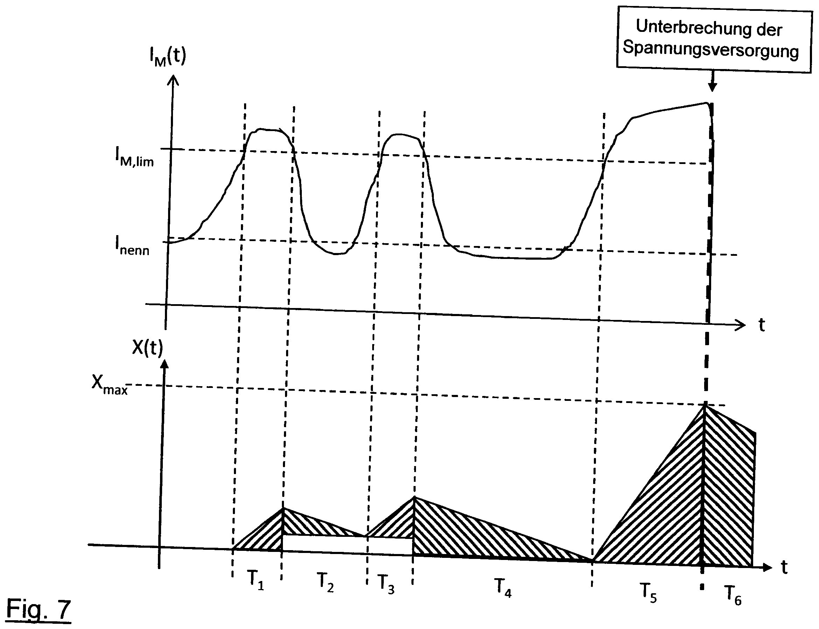

Figur 7 veranschaulicht einen Verlauf dieses Zählers X in Abhängigkeit des Motorstroms l_{M} über der Zeit t. Das obere Diagramm in Figur 7 zeigt einen rein beispielhaften Verlauf des Motorstroms l_{M}(t) über der Zeit t. Zu Beginn der Stromkurve liegt der Motorstrom l_{M} etwas unterhalb des Nennstroms Inenn und steigt dann zunehmend in Richtung des Grenzstroms l_{M,lim}. Sobald dieser Grenzstrom l_{M,lim} erreicht ist, wird ein Zähler X hochgezählt. Dies erfolgt so lange, wie die Grenztemperatur l_{M,lim} überschritten bleibt, Zeitraum T₁. Unterschreitet der Motorstrom l_{M} den Grenzstrom l_{M,lim} wieder, ist die Gefahr einer Übertemperatur zunächst wieder gebannt, weil die Motorwicklungstemperatur ϑ sinkt. Dies wird dadurch berücksichtigt, dass der Zähler X für den Zeitraum, in dem der Motorstrom l_{M} den Stromgrenzwert l_{M,lim} unterschreitet, zunehmend verringert wird, siehe Zeitraum T₂. Da die Abkühlung des Elektromotors 1 langsamer verläuft, als sein Aufheizen bei maximalem Motorstrom l_{M,max}, wird hier bei der Erhöhung und Verringerung des Zählers X mit unterschiedlichen Zeitkonstanten gerechnet, wobei die Zeitkonstante für die Verringerung des Zählers X kleiner ist als die Zeitkonstante für die Erhöhung des Zählers X.

Die Verringerung des Zählers X im Zeitraum T₂ wird so lange fortgesetzt, wie der Motorstrom l_{M} unterhalb des Grenzstroms l_{M,lim} bleibt. Wird dieser wieder überschritten, erfolgt wieder eine Erhöhung des Zählers X, siehe Zeitabschnitt T₃, bis der Grenzwert l_{M,lim} wieder unterschritten wird, was eine erneute Verringerung des Zählers X bewirkt, siehe Zeitabschnitt T₄. In diesem Zeitabschnitt T₄ wird der Grenzstrom l_{M,lim} so lange unterschritten, dass der Zähler X vollständig bis auf null reduziert, d.h. die zuvor durch den Motorstrom l_{M} eingebrachte Wärme in den Motor 1 am Ende des Zeitraum T₄ wieder vollständig abgebaut ist. Anschließend steigt in dem Beispiel gemäß Figur 7 jedoch der Motorstrom l_{M} wieder über den Grenzwert l_{M,lim} und zwar für eine Dauer des Zeitraums T₅, die ein Ansteigen des Zählers X bis zu einem Maximalwert Xₘₐₓ zur Folge hat. Das Erreichen dieses Maximalzählerstandes Xₘₐₓ führt zu einer Unterbrechung der Spannungsversorgung zum Elektromotor 1 hin, beispielsweise gemäß einer der Varianten in Figuren 2 oder 3, so dass die Motorwicklungen 1a stromlos geschaltet werden und kein weiterer Wärmeeintrag in den Elektromotor 1 erfolgt. Der Motorstrom l_{M} wird dadurch Null und der Zähler respektive die Motortemperatur ϑ langsam wieder abgebaut, wie anhand des nur teilweise dargestellten Verlaufs der Stromkurve und des Zählerstands im Zeitraum T₆ in Figur 7 erkennbar ist.

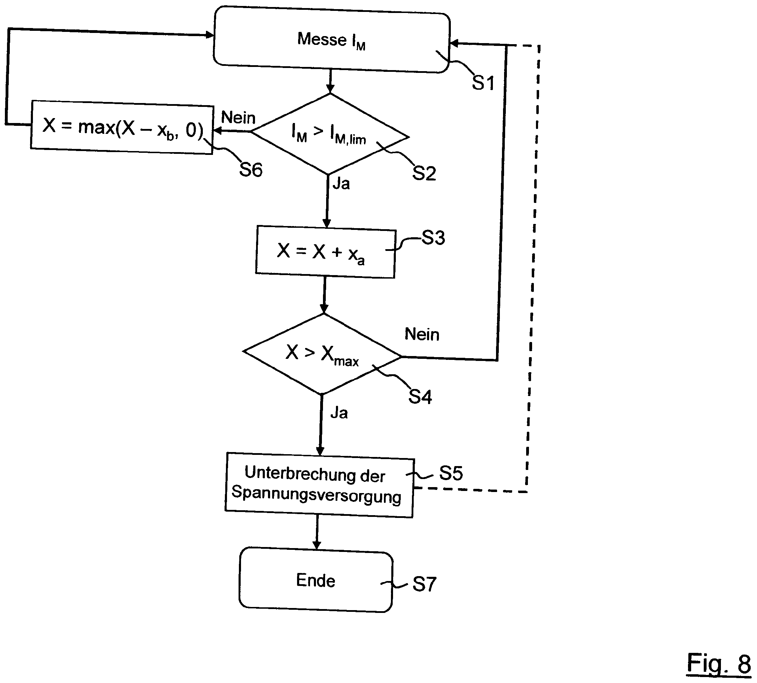

Der Ablauf des erfindungsgemäßen Verfahrens gemäß einer Ausführungsvariante ist in Figur 8 veranschaulicht. Es beginnt mit der Messung des Motorstroms l_{M,}Schritt S1, der anschließend daraufhin überprüft wird, ob er größer als der Grenzwert l_{M,lim} ist, siehe Schritt S2. Ist dies der Fall, wird der Zähler X um einen Betrag xa erhöht, siehe Schritt S3. Versteht man diesen Betrag als Strom-Zeitwert lₐ·Δt, d.h. als Zuwachs lₐ pro Zeiteinheit Δt wird deutlich, dass der Zähler auch als Strom-Zeit-Integral verstanden werden kann.

Nach der Zählererhöhung wird überprüft, ob der Maximalzählerstand Xₘₐₓ erreicht ist, siehe Schritt S4. Ist dies nicht der Fall, wird das Verfahren an seinem Anfang fortgesetzt. Allerdings kann die Durchführung des Verfahrens zyklisch, beispielsweise alle 100ms erfolgen, so dass zwischen dem Schritt S4 und dem Schritt S1 ein entsprechender Warteblock liegen kann, um das Ende des aktuellen Zyklus abzuwarten.

Ergibt die Überprüfung in Schritt S4, dass der Zähler X seinen Maximalzählerstand Xₘₐₓ erreicht hat, erfolgt die Unterbrechung der Spannungsversorgung wie in Figur 7 veranschaulicht, siehe Schritt S5. Das Verfahren ist damit beendet, Schritt S7. Alternativ kann die Motortemperaturüberwachung auch während der Unterbrechung der Spannungsversorgung fortgesetzt werden, um so zu erkennen, ob und wann die Motorwicklungstemperatur wieder einen unkritischen Wert angenommen hat. Eine solche Möglichkeit ist insbesondere mit der Ausführungsvariante in Figur 3 umsetzbar, bei der lediglich die Versorgungsspannung des Wechselrichters 6 respektive seiner Treiberlogik 6a unterbrochen wird, um die Motorwicklungen stromlos zu schalten, die Motorelektronik im Übrigen jedoch versorgt bleibt.

Ergibt die Messung des Motorstroms l_{M}, dass der Grenzwert l_{M,lim} in Schritt S2 nicht überschritten ist, wird der Zähler X um einen Betrag x_{b} reduziert, siehe Schritt S6. Um negative Zählerwerte zu vermeiden wird im Schritt S6 der größere der beiden Werte "Null" und "Zählerstand X-x_{b}" als neuer Zählerstand verwendet.

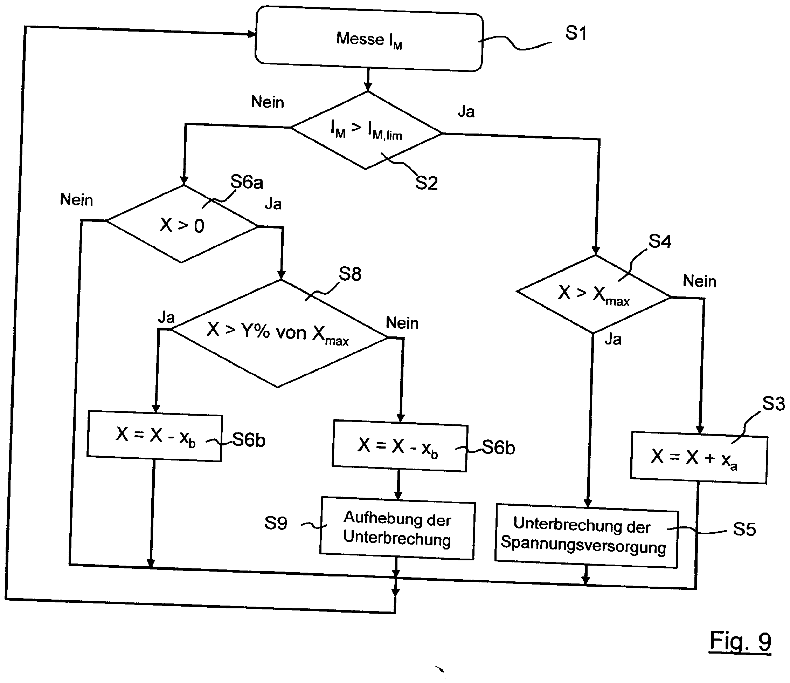

Figur 9 zeigt eine alternative Ausführungsvariante des Verfahrens. Gleiche Schritte sind hier mit gleichen Bezugszeichen wie in Figur 8 gekennzeichnet. Das Verfahren gemäß Figur 9 unterscheidet sich von dem Verfahren in Figur 8 dadurch, dass die Abfrage, ob der Maximalzählerstand Xₘₐₓ erreicht ist, Schritt S4, vor der Erhöhung des Zählers X liegt und eine Erhöhung des Zählers X, Schritt S3, nur dann stattfindet, wenn der Maximalzählerstand Xₘₐₓ noch nicht überschritten ist.

Als weiterer Unterschied ist die Maximalwertsuche in Schritt S6 einschließlich der Verringerung des Zählers X um den Wert x_{b} auf zwei Einzelschritte S6a und S6b aufgeteilt. So erfolgt bei der Variante in Figur 9 in Schritt S6a zunächst die Abfrage, ob der Zählerstand X noch größer als Null ist. Ist dies nicht der Fall, muss der Zähler X nicht weiter verringert werden und das Verfahren ist beendet bzw. wird vorn fortgesetzt. Ist der Zähler X dagegen größer Null, erfolgt eine Reduzierung um den Betrag x_{b}, siehe Schritt S6b.

Als zusätzliche Ergänzung ist in der Ausführungsvariante gemäß Figur 9 eine Überprüfung berücksichtigt, ob der Zähler X bereits unter eine definierte Grenze Y von Xₘₐₓ gefallen ist, die eine Aufhebung der Unterbrechung, Schritt S9, d.h. eine Wiederherstellung der Spannungsversorgung 11, 9 zum Elektromotor 1 erlaubt. Diese Grenze Y kann beispielsweise 70% (Y=0,7) des Maximalzählerstands Xₘₐₓ betragen. Die Spannungsversorgung wird dann wiederhergestellt, gleichzeitig aber auch der Zählerstand X reduziert, Schritt S6b. Das Verfahren wird dann wieder bei Schritt S1 fortgesetzt, sobald der aktuelle Zyklus beendet ist, bzw. der nächste Zyklus beginnt.

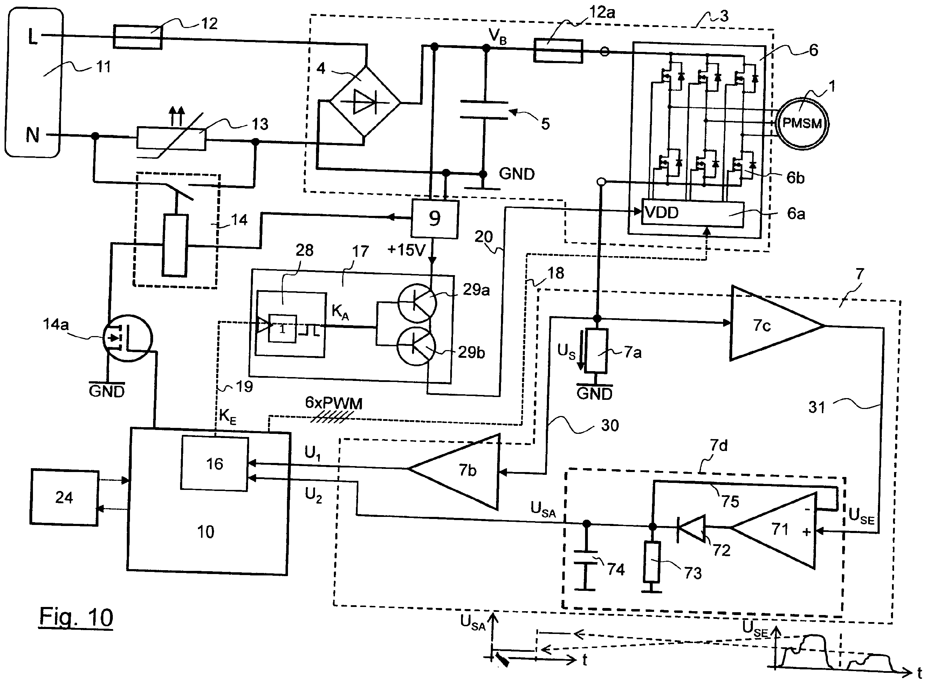

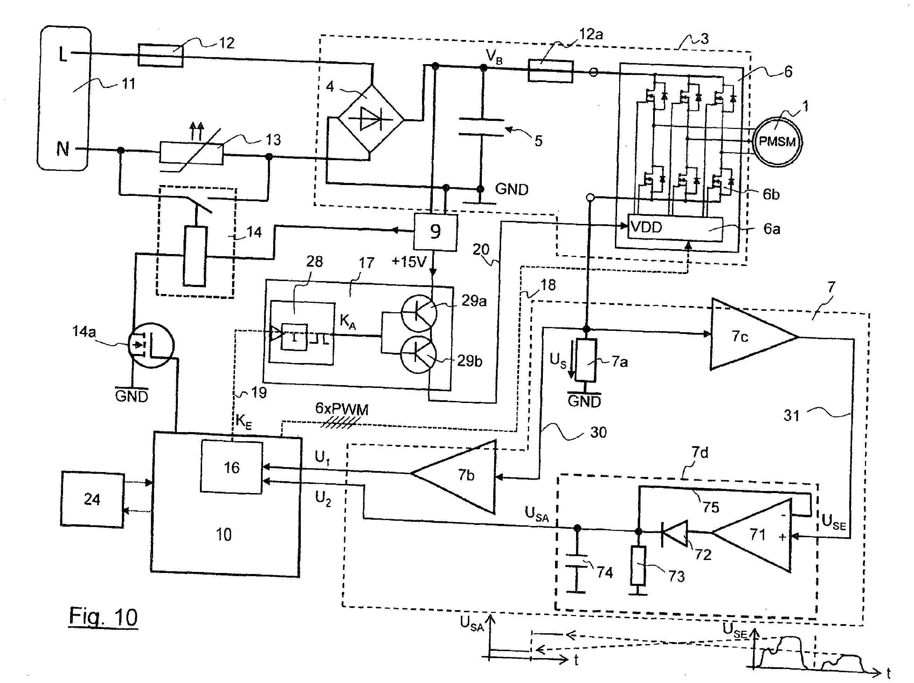

Figur 10 zeigt eine Detaildarstellung der Hardwarekomponenten einer Schaltungsanordnung gemäß der Erfindung. Der Elektromotor 1, der hier rein beispielhaft als permanentmagnetischer Synchronmotor (PMSM) dargestellt ist, wird von einem Drehzahlsteller 3 gespeist, der über eine Sicherung 12 und eine Einschaltstrombegrenzung in Gestalt eines PTC 13 mit einer Netzspannungsversorgung 11 verbunden ist. Die Sicherung 12 verbindet den Drehzahlsteller 3 mit der Phase der Netzspannungsversorgung 11, während der PTC 13 mit dem Nullleiter der Netzspannungsversorgung 11 verbunden ist. Der Drehzahlsteller 3 umfasst einen Gleichrichter 4, einen Spannungszwischenkreis 5, der hier durch einen Kondensator veranschaulicht ist, sowie einen Wechselrichter 6, der mit dem Zwischenkreispotential V_{B} verbunden, d.h. aus dem Spannungszwischenkreis 5 gespeist ist. Zwischen dem Zwischenkreis 5 und dem Wechselrichter 6 liegt eine weitere Sicherung 12a.

Der Wechselrichter 6 ist aus einer Anzahl schaltbarer Leistungshalbleiter 6b sowie einer Treiberschaltung 6a (Treiberlogik) gebildet, wobei die Leistungshalbleiter 6b, beispielsweise MOSFETs, mittels der Treiberschaltung 6a so angesteuert werden, dass die drei Phasen des Elektromotors 1 gemäß einer definierten Sequenz mit dem Zwischenkreispotential V_{B} verbunden werden. Dabei ist jedem Halbleiterschalter 6b ein eigener Treiber der Treiberschaltung 6a zugeordnet. Treiber und zugeordneter Halbleiterschalter 6b können gegebenenfalls auch baulich eine Einheit bilden. In dem Beispiel gemäß Figur 10 sind sechs Halbleiterschalter 6b vorhanden, wobei jeweils zwei Halbleiterschalter 6b eine Phase des Elektromotors 1 speisen und unter Bildung einer Vollbrücke in Reihe geschaltet sind, und wobei der Knoten zwischen ihnen die speisende Verbindung der entsprechenden Motorphase darstellt. Somit liegt jeder Halbleiterschalter 6b in einer Halbbrücke. Je eine Diode liegt antiparallel zu den Halbleiterschaltern 6b und leitet Kreisströme bei der Kommutierung der Motorspannung von einer Halbbrücke zur nächsten. Wird einer der oberen Halbleiterschalter 6b eingeschaltet, so wird die entsprechende Motorphase mit dem Zwischenkreispotential V_{B} verbunden. Wird dagegen einer der unteren Halbleiterschalter 6b eingeschaltet, erfolgt die Verbindung der Motorphase mit Masse (GND). Die Ansteuerverfahren der Halbleiterschalter derartiger Wechselrichter sind hinlänglich bekannt, so dass an dieser Stelle auf die einschlägige Literatur verwiesen wird.

Der Wechselrichter 6 ist über einen einzigen Messwiderstand 7a, hier in Gestalt eines Shunts, mit Masse (GND) verbunden. Anstelle eines einzigen Shunts können auch zwei oder drei Messwiderstände verwendet werden, die parallel oder in Reihe liegen können. Der Messwiderstand 7a ist Teil der Messmittel 7, wie sie auch in den Figuren 2 und 3 dargestellt sind. Der Motorstrom l_{M} wird über den Spannungsabfall U_{S} an dem Messwiderstand 7a ermittelt. Die Spannung U_{S} am Messwiderstand 7a wird einem Operationsverstärker 7b zugeführt, der hier einen Messverstärker bildet und an seinem Ausgang einen ersten Messwert U₁ zur Verfügung stellt, welcher der Steuereinheit 10, insbesondere der Motortemperatur-Überwachungseinheit 16 zugeführt ist. Der Weg vom Messwiderstand 7a zu dem entsprechenden Eingang der Steuereinheit 10 für den ersten Messwert U₁ stellt einen ersten Signalpfad 30 dar. Über einen zweiten Signalpfad 31 wird ein zweiter Messwert U₂ erzeugt und der Steuereinheit 10 bzw. der Motortemperatur-Überwachungseinheit 16 neben dem ersten Messwert U₁ bereitgestellt. Der zweite Messwert U₂ ist gegenüber dem ersten Messwert U₁ invertiert. Durch die zwei Signalpfade 30, 31 ist somit nicht nur aufgrund der Redundanz Sicherheit gegeben, vielmehr kann aufgrund der Invertierung im Rahmen einer Plausibilitätsprüfung auch die Richtigkeit der Messwerte U₁, U₂ bewertet werden. Hierdurch lassen sich Fehler bei der Analog-Digital Wandlung (im ADC) der analogen Messwerte U₁, U₂ in der Steuereinheit 10 erkennen.

Der erste und zweite Signalpfad 30, 31 haben denselben Ursprung, nämlich den Spannungsabfall U_{S} am Messwiderstand 7a. Der zweite Signalpfad 31 umfasst einen Operationsverstärker 7c sowie eine Einrichtung 7d zur Zeitintervall-bezogenen Maximalwertbestimmung. Der Operationsverstärker 7c verstärkt zunächst die Messspannung des Messwiderstands 7a und führt sie dann der Einrichtung 7d zur Maximalwertbestimmung zu. Diese Einrichtung 7d umfasst ebenfalls einen Operationsverstärker 71, der extern derart beschaltet ist, dass sein Ausgangssignal stets dem Maximalwert des Eingangssignals innerhalb einem bestimmten Zeitintervall entspricht, welches ebenfalls durch die externe Beschaltung (RC-Glied) festgelegt ist. Dies erfolgt durch die geeignete Dimensionierung eines Widerstands 73 und eines hierzu parallel liegenden Kondensators 74, die am Ausgang des Operationsverstärkers 71 hinter einer Diode 72 liegen, wobei der gemeinsame Knotenpunkt des Kondensators 74, des Widerstands 73 und des Kathodenanschlusses der Diode 72 über einen Rückkopplungszweig 75 mit dem negativen Eingang des Operationsverstärkers 71 verbunden ist. Weitere Bauteile im Rückkopplungszweig 75, die eine Signalverstärkung bewirken, sind hier der Einfachheit halber nicht gezeigt. Aufgrund der Rückkopplung auf den negativen Operationsverstärkereingang ist das Ausgangssignal U_{SA} der Einrichtung 7d zur Maximalwertbestimmung zudem gegenüber dem Eingangssignal U_{SE} invertiert.

Die Wirkungsweise der Maximalwertbestimmungseinheit 7d ist in Figur 10 unterhalb der Einrichtung 7d dargestellt. Für jedes Zeitintervall, beispielsweise alle 100ms, wird der Maximalwert des analoge Eingangssignals U_{SE}(t) in diesem Zeitintervall bestimmt. Aufgrund der Invertierung führt jedoch ein erster Maximalwert am Eingang im ersten Intervall, der größer ist als ein zweiter Maximalwert am Eingang im zweiten Intervall, zu einem ersten Maximalwert am Ausgang für das erste Intervall, der kleiner ist als ein zweiter Maximalwert am Ausgang für das zweite Intervall. Das analoge Ausgangssignal U_{SA}(t) der Einrichtung 7d zur Zeitintervall-bezogenen Maximalwertbestimmung stellt für jeden Zeitpunkt t den zweiten Messwert U₂ dar, der der Steuereinheit 10 bzw. der Motortemperatur-Überwachungseinheit 16 zugeführt wird. Die beiden Messwerte U₁, U₂ sind analoge Werte und werden in der Steuereinheit 10 mittels AD-Wandler in digitale Werte umgewandelt.

Der jeweilige Verlauf des in Figur 10 unterhalb der Einrichtung 7d dargestellten Eingangssignals U_{SE}(t) und des zugehörigen Ausgangssignals U_{SA}(T) dient nur der Veranschaulichung der Wirkungsweise der Einrichtung 7d. Die Verläufe sind aber nicht repräsentativ für den tatsächlichen Verlauf des Motorstroms l_{M}(t). Der tatsächliche Verlauf ist sehr "sprunghaft", da über den Shunt 7a während des normalen (PWM-) Betriebs des Wechselrichters 6 kein konstanter Strom fließt, sondern je nach Schaltzustand der Halbleiterschalter 6b zu einem Zeitpunkt nur ein Phasenstrom und zu einem anderen Zeitpunkt eine Kombination (Addition/Differenz) aus zwei Phasenströmen zu sehen ist. Während also der erste Messwert U₁ einen vergleichsweise unruhigen und sprunghaften Verlauf aufweist, umfasst der zweite Messwert die intervallweise konstanten, aber invertierten Messwerte U_{SA}(t), wobei die Invertierung hier softwareseitig aber auch wieder rückgängig gemacht werden kann.

In der Motortemperatur-Überwachungseinheit 16 wird nun ein Vergleich des ersten und zweiten Messwerts U₁, U₂ miteinander durchgeführt, so dass abnormale, auf einen Fehler hinweisende Unterschiede, erkannt werden können. Dabei berechnet die Motortemperatur-Überwachungseinheit 16 aus dem invertierten Signal U₂ wieder den nicht-invertierten Motorstrom l_{M}. Für die Überwachung der Motortemperatur ϑ wird der betraglich größere der beiden Messwerte U₁, U₂ verwendet. Dies stellt sicher, dass keine Übertemperatur aufgrund eines Timingfehlers unentdeckt bleibt, durch den immer ein zur geringer Motorstrom l_{M} in der Steuereinheit 10 gemessen wird. Im Falle einer betraglichen Abweichung der Messwerte U₁, U₂ voneinander von mehr als 15% über einen definierten Beobachtungszeitraum von beispielsweise 1s hinweg, wird auf einen Fehler in der Messwertverarbeitung geschlossen und die Spannungsversorgung ebenfalls zur Sicherheit unterbrochen.

Die Motortemperatur-Überwachungseinheit 16 führt ferner aufgrund des Messwerts U₁, bzw. gegebenenfalls aufgrund des Messwert U₂ das erfindungsgemäße Verfahren durch, insbesondere die Verfahrensschritte S2 bis S9 gemäß der Figuren 8 oder 9 und steuert in Abhängigkeit des Zählerstands X das Trennmittel 17 an, das hier in Gestalt einer elektronischen Schalteinrichtung ausgeführt ist. Diese umfasst zwei in Reihe liegende Einzelschalter 29a, 29b in Form jeweils eines Bipolartransistors 29a, 29b, die von demselben Steuersignal K_{A} angesteuert werden und die zwischen der Niederspannungsversorgung 9 und dem Eingang für die Versorgungsspannung VDD der Treiberschaltung 6a des Wechselrichters 6 liegen, so dass die Treiberschaltung 6a nur dann mit Spannung versorgt wird, wenn beide Einzelschalter 29a, 29b aufgesteuert sind. Die doppelte Ausführung eines Einzelschalters 29a, 29b dient hier wieder der Redundanz. Somit ist sichergestellt, dass im Falle eines Defekts eines der Einzelschalter 29a, 29b die Spannungsversorgung VDD zumindest durch den anderen Einzelschalter unterbrochen werden kann.

Durch die Unterbrechung der Niederspannungsversorgung 9 kann die Treiberschaltung 6a die Halbleiterschalter 6b nicht mehr einschalten bzw. nicht eingeschaltet halten, da hierfür eine Steuerspannung erforderlich ist. Infolgedessen werden und bleiben die Motorwicklungen 1a von der Zwischenkreisspannung V_{B} getrennt und somit stromlos.

Die elektronische Schalteinrichtung 17 umfasst eine monostabile Kippstufe 28, umgangssprachlich auch als Monoflop bezeichnet, die das Steuersignal K_{A} für die Einzelschalter 29a, 29b an ihrem Ausgang erzeugt. Dieses Steuersignal K_{A} ist ein Einzelimpuls einer bestimmten Dauer, wenn am Eingang ein Impuls, ein sogenannter Trigger, ankommt. Erfindungsgemäß ist vorgesehen, dass die Steuereinheit 10, insbesondere die Motortemperatur-Überwachungseinheit 16, die Kippstufe 28 mit einem Triggersignal K_{E} ansteuert, das aus einer Reihe von Triggerimpulsen besteht, deren zeitlicher Abstand kleiner als die Dauer des Einzelimpulses der Kippstufe 28 ist, so dass die Kippstufe 28 quasi ein kontinuierliches Ausgangssignal liefert, solange das Triggersignal K_{E} anliegt. Somit realisiert die elektronische Schalteinrichtung 17 eine Totmann-Schaltung, die nur dann die Spannungsversorgung aufrechterhält, wenn ihr immer wieder gesagt, wird, dass alles in Ordnung ist.

Stellt die Motortemperatur-Überwachungseinheit 16 eine drohende Übertemperatur fest, wird das Triggersignal K_{E} ausgesetzt. Infolgedessen endet der Impuls der Kippstufe 28 und die beiden Einzelschalter 29a, 29b werden nicht mehr aufgesteuert. Die Versorgungsspannung zur Treiberschaltung 6a wird somit unterbrochen.

Zusätzlich zur elektronischen Schalteinrichtung 17 ist bei der Ausführungsvariante gemäß Fig. 10 auch ein Trennrelais 14 parallel zum PTC 13 angeordnet, um diesen nach dem Verbinden des Elektromotors mit der Netzspannungsversorgung 11 zu überbrücken, weil der Motor 1 anderenfalls aufgrund des aufzunehmenden Stroms und des dadurch bedingten hohen Widerstands des PTC 13 nicht anlaufen würde. Damit der Zwischenkreis 5 seinen im Betrieb üblichen Strom ziehen kann, wird das Trennrelais 14 nach dem Herstellen der Verbindung zum Netz 11, insbesondere beim Hochfahren der Motorelektronik geschlossen. Hierzu wird ein MOSFET Transistor 14a verwendet, der von der Steuereinheit 10 angesteuert wird, und der den Schalteingang des Trennrelais 14 zu Masse (GND) hin verbindet. Alternativ kann der Transistor 14a das Relais 14a mit der Niederspannungsversorgung 9 verbinden.

Es ist nicht nötig, aber möglich das Trennrelais 14 als weitere Sicherheitsmaßahme zu öffnen, wenn ein Fehler in der Motorelektronik oder im Elektromotor 1 selbst vorliegt. So kann die elektronische Schalteinrichtung 17 oder eine weitere solche Schalteinrichtung die Spannungsversorgung 9 zu dem Trennrelais 14 im Falle eines Fehlers, insbesondere im Falle einer drohenden Übertemperatur zusätzlich oder alternativ zur Versorgungsspannung des Wechselrichters 6 schalten, um die Motorwicklungen 1a stromlos zu schalten.

Mit der Steuereinheit 10 ist ein nicht flüchtiger Speicher 24 datentechnisch verbunden. In ihm kann beispielsweise der aktuelle Zählerstand des Zählers X, und/ oder können die Messwerte U₁, U₂ hinterlegt werden, um diese anschließend zu vergleichen. Das Abspeichern des Zählerstands hat den Vorteil, dass dieser nach einer Unterbrechung der Spannungsversorgung 9, 11 weiterhin vorliegt und dann als Startwert für den Zähler verwendet werden kann. Hierdurch wird vermieden, dass die Motortemperatur-Überwachungseinheit 16 durch die Unterbrechung der Spannungsversorgung die Temperaturinformation verliert und bei Widerkehr der Spannungsversorgung mit dem falschen Startwert null arbeitet, obwohl der Motor bereits eine Temperatur über dem Temperaturgrenzwert haben kann. Dies ist beispielsweise möglich, wenn die Abschaltung des Elektromotors bzw. Unterbrechung der Spannungsversorgung vor dem Erreichen der Grenztemperatur aber während dem Überschreiten des Grenzwerts für den Motorstrom bzw. der davon abhängigen Größe aufgrund eines anderen Fehlers oder durch manuelles Einwirken erfolgt.

Die Überwachung des Motorstroms l_{M} wird erfindungsgemäß in jedem Betriebszustand des Elektromotors 1 durchgeführt, insbesondere auch dann, wenn sich der Motor 1, respektive seine Elektronik in einem Stand-by Modus, d.h. einem Betriebsbereitschaftsmodus befindet, in dem der Motor 1 zwar nicht dreht, jedoch hierzu zu jeder Zeit bereit ist. Hat einer der Halbleiterschalter 6b des Wechselrichters 6 einen Defekt, der sich bei einem Halbleiterschalter regelmäßig als Kurzschluss zwischen den Leistungsanschlüssen (Drain-Source, Emitter-Kollektor) oder sogenannter "Partial-Turn-On", d.h. einem endlichen Einschaltwiderstand ohne Kontrolle über das Gate bzw. die Basis manifestiert, kann ein Leckstrom über den Motor fließen, der durch eine Messung des Motorstroms und einem Vergleich mit einem Bereitschaftsgrenzwert erkannt werden kann.

Daher ist gemäß einer Ausführungsvariante die Steuereinheit 10 dazu eingerichtet im Betriebsbereitschaftsmodus festzustellen, ob der Motorstrom größer als ein Bereitschaftsgrenzwert ist. Ist dies der Fall, so ist die Steuereinheit eingerichtet, die Halbleiterschalter 6b einzeln nacheinander einzuschalten. Liegt in einem der Halbleiterschalter 6b ein Defekt, respektive ein Kurzschluss vor, so wird durch das Einschalten des mit dem defekten Halbleiterschalters in derselben Vollbrücke in Reihe liegenden Halbleiterschalters ein Kurzschluss des Zwischenkreispotenzials V_{B} zu Masse bzw. über den Messwiderstand 7a zu Masse provoziert. Dies führt wiederum zu einem Kurzschlussstrom, durch welchen entweder die Sicherung 12, 12a auslöst, oder die erfindungsgemäße Motortemperaturüberwachung eine Notabschaltung der Spannungsversorgung wegen drohender Übertemperatur initiiert.

Die Erfindung ist nicht auf die beschriebenen konkreten Ausführungsvarianten beschränkt. Dem Fachmann ist vielmehr klar, dass die erfindungsgemäße Schaltungsanordnung und das erfindungsgemäße Verfahren auf beliebige, naheliegende Weise abgewandelt werden kann, ohne vom Grundgedanken der Erfindung abzugehen. So kann sie bzw. es bei beispielsweise bei andere Motortypen als PMSM verwendet werden, auf Generatoren und/ oder auf beliebige Drehzahlsteller übertragen werden kann. Der Motorstrom kann zudem alternativ zur Messung mittels Messwiderstand auch aus einer anderen Größe berechnet oder sogar aufgrund eines mathematischen Modells des Elektromotors geschätzt werden. Die Niederspannungsversorgung 9 kann je nach Bedarf auch zwei oder mehr verschiedene Versorgungsspannungen erzeugen und dem jeweiligen Bauteil je nach Bedarf bereitstellen. Der Zwischenkreis 5 kann ebenfalls beliebig, beispielsweise mit zwei Kondensatoren symmetrisch aufgebaut sein, so dass eine positive oder negative Zwischenkreisspannung an die Motorwicklungen durchschaltbar ist. Hierzu kann der Wechselrichter in bekannter Weise zwei Halbleiterschalter pro Halbbrücke, insgesamt also 12 Halbleiterschalter aufweisen. Darüber hinaus ist es möglich, alternativ zu einem aufwärts zählenden Zähler, einen rückwärts zählenden Zähler zu realisieren. Die vorbeschriebenen Schritte bei einem Über- oder Unterschreiten des Grenzwerts sind dabei dann entsprechend vertauscht.

### Bezugszeichenliste

- 1: Elektromotor
- 1a: Motorwicklung
- 2: Temperaturfühler, PTC
- 3: Drehzahlsteller, Frequenzumrichter
- 4: Gleichrichter
- 5: Spannungszwischenkreis
- 6: Wechselrichter
- 6a: Treiberschaltung
- 6b: Halbleiterschalter
- 7: Messmittel für Motorstrom
- 7a: Messwiderstand, Shunt
- 7b: Operationsverstärker
- 7c: Operationsverstärker
- 7d: Einrichtung zur Zeitintervall-bezogenen Maximalwertbestimmung
- 71: Operationsverstärker
- 72: Diode
- 73: Widerstand
- 74: Kondensator
- 75: Rückkopplungszweig
- 8: Störungsfilter
- 9: Niederspannungsversorgung
- 10: Steuereinheit
- 11: Netzspannungsversorgung
- 12: Sicherung
- 12a: Sicherung
- 13: Einschaltstrombegrenzung
- 13a: modifizierte Einschaltstrombegrenzung
- 14: Trennmittel, elektromechanischer Schalter, Trennrelais
- 14a: Transistor, MOSFET
- 15: Und-Gatter
- 16: Motortemperatur-Überwachungseinheit
- 17: Trennmittel, elektronische Schalteinrichtung
- 18: PWM-Steuerleitung
- 19: Steuerleitung von Steuereinheit zum Trennmittel
- 20: Versorgungsleitung zum Drehzahlsteller/ Wechselrichter
- 21: Versorgungsleitung zur Steuereinheit
- 22: Versorgungsleitung zum Temperaturfühler
- 23: Steuerleitung von Temperaturfühler zum Trennrelais
- 24: Nicht-flüchtiger Speicher
- 25: Messleitung für Zwischenkreisspannung
- 26: Messleitung für Motorstrom
- 27: Schaltleitung vom UND-Gatter zum Trennrelais
- 28: Monostabile Kippstufe
- 29a: Einzelschalter, Transistor
- 29b: Einzelschalter, Transistor
- 30: Erster Signalpfad
- 31: Zweiter Signalpfad

## Patentansprüche

1. Verfahren zum Schutz eines Elektromotors (1) insbesondere eines Kreiselpumpenaggregats vor einer Übertemperatur, bei dem im Falle eines Fehlers eine Unterbrechung einer Spannungsversorgung (9, 11) durch Öffnen eines Trennmittels (14, 17) erfolgt, **dadurch gekennzeichnet, dass** der vom Elektromotor (1) aufgenommene Motorstrom (l_{M}) und/ oder eine davon abhängige Größe (Uₛ) ermittelt und überprüft wird, wobei die Unterbrechung dann erfolgt, wenn der Motorstrom (l_{M}) und/ oder die davon abhängige Größe (Us) unabhängig von der tatsächlichen Höhe des Motorstroms (l_{M}) über einen bestimmten ununterbrochenen Zeitraum hinweg oder über eine Summe aus mehreren definierten unterbrochenen Zeiträumen hinweg über einem Grenzwert (l_{M,lim}) liegt, der kleiner als der zulässige maximale Motorstrom (I_{M},ₘₐₓ) oder ein hierzu korrespondierender Wert der vom Motorstrom (l_{M}) abhängigen Größe (Us) ist.

2. Verfahren nach Anspruch 1, **dadurch gekennzeichnet, dass** der Grenzwert (l_{M,lim}) zwischen 1/3 und 2/3 des maximalen Motorstroms (l_{M,max}) liegt, insbesondere demjenigen größten Motorstrom (l_{M,lim}) entspricht, bei dessen ununterbrochenem Anliegen eine bestimmte Grenztemperatur (ϑₗᵢₘ) nicht überschritten wird.

3. Verfahren nach Anspruch 1 oder 2, **dadurch gekennzeichnet, dass** die Unterbrechung softwaregesteuert bewirkt wird, wobei der Vergleich des Motorstroms (l_{M}) und/ oder der davon abhängigen Größe (U_{S}) mit dem Grenzwert (l_{M,lim}) zyklisch wiederholt wird.

4. Verfahren nach einem der vorherigen Ansprüche, **dadurch gekennzeichnet, dass** ein Zähler (X) erhöht wird, wenn der Motorstrom (l_{M}) und/ oder die davon abhängige Größe (U_{S}) den Grenzwert überschreitet, und die Unterbrechung der Spannungsversorgung (9, 11) dann erfolgt, wenn der Zähler (X) einen Maximalzählerstand (Xₘₐₓ) erreicht oder dass ein Zähler (X) ausgehend von einem Maximalzählerstand (Xₘₐₓ) reduziert wird, wenn der Motorstrom (l_{M}) und/ oder die davon abhängige Größe (Us) den Grenzwert überschreitet, und die Unterbrechung der Spannungsversorgung (9, 11) dann erfolgt, wenn der Zähler (X) den Wert null erreicht.

5. Verfahren nach Anspruch 4, **dadurch gekennzeichnet, dass** der Maximalzählerstand (Xₘₐₓ) demjenigen Zeitraum entspricht oder kleiner ist, der ausgehend von einer bestimmten Grenztemperatur (ϑₗᵢₘ) bei Fließen des maximalen Motorstroms (l_{M,max}) vergeht, bis eine zulässige Maximaltemperatur (ϑₘₐₓ) des Elektromotors (1) erreicht werden würde.

6. Verfahren nach Anspruch 4 oder 5, **dadurch gekennzeichnet, dass** der Zähler (X) verringert wird, wenn der Motorstrom (l_{M}) und/ oder die davon abhängige Größe (Us) den Grenzwert (l_{M,lim}) unterschreitet, insbesondere nur dann verringert wird, wenn er größer null ist oder dass der Zähler (X) erhöht wird, wenn der Motorstrom (l_{M}) und/ oder die davon abhängige Größe (U_{S}) den Grenzwert (l_{M,lim}) unterschreitet, insbesondere nur dann erhöht wird, wenn er kleiner als der Maximalzählerstand (Xₘₐₓ) ist.

7. Verfahren nach Anspruch 6, **dadurch gekennzeichnet, dass** die Erhöhung des Zählers (X) pro Zeiteinheit bei der Grenzwertüberschreitung, insbesondere die Inkrementierung pro Zyklus, mit einer höheren Schrittweite (xₐ) erfolgt, als die Verringerung des Zählers pro Zeiteinheit bei der Grenzwertunterschreitung, insbesondere die Dekrementierung pro Zyklus, um eine entsprechende Schrittweite (x_{b}) oder dass die Verringerung des Zählers (X) pro Zeiteinheit bei der Grenzwertüberschreitung, insbesondere die Dekrementierung pro Zyklus, mit einer höheren Schrittweite erfolgt, als die Erhöhung des Zählers pro Zeiteinheit bei der Grenzwertunterschreitung, insbesondere die Inkrementierung pro Zyklus, um eine entsprechende Schrittweite.

8. Verfahren nach Anspruch 6 oder 7, **dadurch gekennzeichnet, dass** die Unterbrechung der Spannungsversorgung (9, 11) erst dann wieder aufgehoben wird, wenn der Zähler (X) unterhalb einem prozentualen Betrag (Y) des Maximalzählerstands (Xₘₐₓ) liegt, insbesondere mindestens 50% unter dem Maximalzählerstand (Xₘₐₓ) liegt oder dass die Unterbrechung der Spannungsversorgung (9, 11) erst dann wieder aufgehoben wird, wenn der Zähler (X) oberhalb einem prozentualen Betrag (Y) des Maximalzählerstands (Xₘₐₓ) liegt, insbesondere mindestens 50% des Maximalzählerstands (Xₘₐₓ) wieder erreicht hat.

9. Verfahren nach einem der vorherigen Ansprüche, **dadurch gekennzeichnet, dass** der Zählerstand (X) gespeichert und als Startwert für den Zähler (X) verwendet wird, wenn die Spannungsversorgung (9, 11) zum Elektromotor (1) hergestellt, insbesondere wiederhergestellt wird.

10. Verfahren nach einem der vorherigen Ansprüche, **dadurch gekennzeichnet, dass** die Unterbrechung der Spannungsversorgung (9, 11) durch eine Unterbrechung der Versorgungsspannung (VDD) zu der Treiberschaltung (6a) eines den Elektromotor (1) im Normalbetrieb speisenden Wechselrichters (6) mittels einer elektronischen Schalteinrichtung (17) bewirkt wird.

11. Verfahren nach einem der vorherigen Ansprüche, **dadurch gekennzeichnet, dass** der Motorstrom (l_{M}) und/ oder die davon abhängige Größe (U_{S}) auch in einem Betriebsbereitschaftsmodus des Elektromotors (1) ermittelt und überprüft wird, und dass wenn der Motorstrom (l_{M}) und/ oder die davon abhängige Größe (U_{S}) im Betriebsbereitschaftsmodus einen Bereitschaftsgrenzwert überschreitet, Halbeiterschalter (6b) eines den Elektromotor (1) im Normalbetrieb speisenden Wechselrichters (6) sequenziell einzeln eingeschaltet werden.

12. Verfahren nach einem der vorherigen Ansprüche, **dadurch gekennzeichnet, dass** der Motorstrom (l_{M}) und/ oder die davon abhängige Größe (U_{S}) über einen ersten Signalpfad (30) zum Erhalt eines ersten Messwerts (U₁) und gleichzeitig über einen zweiten Signalpfad (31) zum Erhalt eines zweiten Messwerts (U₂) ermittelt wird, wobei der eine der beiden Messwerte (U₁, U₂) gegenüber dem anderen der beiden Messwerte (U₁, U₂) invertiert ist.

13. Verfahren nach einem der vorherigen Ansprüche, **dadurch gekennzeichnet, dass** zur Ansteuerung des Trennmittels (14, 17) eine monostabile Kippstufe (28) verwendet wird, die im fehlerfreien Betrieb des Elektromotors (1) zyklisch getriggert wird, so dass der Ausgang der Kippstufe (28) ein konstantes Steuersignal (K_{A}) ausgibt, um das Trennmittel (14, 17) im geschlossenen Zustand zu halten, und dass die Unterbrechung der Spannungsversorgung dadurch bewirkt wird, dass die Triggerung der Kippstufe (28) ausgesetzt wird.

14. Schaltungsanordnung zum Schutz eines Elektromotors (1) insbesondere eines Kreiselpumpenaggregats vor einer Übertemperatur, mit einem Trennmittel (14, 17) zur Unterbrechung einer Spannungsversorgung im Falle eines Fehlers, **gekennzeichnet durch** ein Messmittel (7) zur Bestimmung des vom Elektromotor (1) aufgenommenen Motorstroms (l_{M}) und/ oder einer davon abhängige Größe (U_{S}), und eine Steuereinheit (10) zur Überprüfung des Motorstroms (l_{M}) oder der davon abhängigen Größe (U_{S}), wobei die Steuereinheit (10) dazu eingerichtet ist, das Trennmittel (14, 17) so anzusteuern, dass die Spannungsversorgung unterbrochen wird, wenn der Motorstrom (l_{M}) und/ oder die davon abhängige Größe (Us) unabhängig von der tatsächlichen Höhe des Motorstroms (l_{M}) über einen bestimmten ununterbrochenen Zeitraum hinweg oder über eine Summe aus mehreren definierten unterbrochenen Zeiträumen hinweg über einem Grenzwert (l_{M,lim}) liegt, der kleiner als der zulässige maximale Motorstrom (l_{M,max}) oder ein hierzu korrespondierender Wert der vom Motorstrom (l_{M}) abhängigen Größe (Us) ist.

15. Schaltungsanordnung nach Anspruch 14, **dadurch gekennzeichnet, dass** das Messmittel (7) einen ersten Signalpfad (30) zum Erhalt eines ersten Messwerts (U₁) und einen zweiten Signalpfad (31) zum Erhalt eines zweiten Messwerts (U₂) umfassen, wobei einer der beiden Messwerte (U₁, U₂) gegenüber dem anderen der beiden Messwerte (U₁, U₂) invertiert ist.

16. Schaltungsanordnung nach einem der Ansprüche 14 oder 15, **dadurch gekennzeichnet, dass** das Trennmittel (14, 17) eine elektronische Schalteinrichtung (17), insbesondere zumindest ein steuerbarer Halbleiterschalter (29a, 29b) ist, über die in ihrem geschlossenen Zustand eine Treiberschaltung (6a) eines den Elektromotor (1) im Normalbetrieb speisenden Wechselrichters (6) mit einer Versorgungsspannung (9) verbunden ist.

17. Schaltungsanordnung nach einem der Ansprüche 14 bis 16, **gekennzeichnet durch** eine das Trennmittel (14, 17) steuernde monostabile Kippstufe (28), die von einem Steuersignal (K_{E}) der Steuereinheit (10) triggerbar ist, wobei die Steuereinheit (10) eingerichtet ist, die Kippstufe (28) im fehlerfreien Betrieb des Elektromotors (1) zyklisch zu triggern, und die Kippstufe (28) eingerichtet ist, durch die zyklische Triggerung ein konstantes Steuersignal (KA) auszugeben, um das Trennmittel (14, 17) im geschlossenen Zustand zu halten, und wobei die Steuereinheit (10) ausgebildet ist, die zyklische Triggerung auszusetzen, wenn der Motorstrom (l_{M}) und/ oder die davon abhängige Größe (U_{S}) über einen bestimmten ununterbrochenen Zeitraum hinweg oder über mehrere unterbrochene Zeiträume hinweg über einem Grenzwert (l_{M,lim}) liegt.

18. Elektromotor, insbesondere eines Kreiselpumpenaggregats, mit einer Motorelektronik umfassend eine Schaltungsanordnung nach einem der Ansprüche 14 bis 17.

## Claims

1. Procedure for the protection of an electric motor (1), in particular a rotary pump assembly against excess temperature, in which the power supply (9, 11) is interrupted in case of a fault by the opening of a disconnect mechanism (14, 17), **characterised by** determining and checking the motor current consumed by the electric motor (1) (l_{M}) and/or a parameter depending on the same (Uₛ), in which interruption takes place when the motor current (l_{M}) and/or the parameter depending on the same (U_{S}) independently of the actual level of the motor current (l_{M}), over a certain uninterrupted time period or over the sum of several defined interrupted time periods, exceeds a limit value (l_{M,lim}) that is less than the permissible maximum motor current (l_{M,max}) or a corresponding value of the parameter (Us) depending on the motor current (l_{M}).

2. Procedure according to claim 1, **characterised by** the limit value (l_{M,lim}) lying between 1/3 and 2/3 of the maximum motor current (l_{M,max}), in particular corresponding to the greatest motor current (l_{M,lim}) at which a certain temperature limit (ϑₗᵢₘ) is not exceeded when it is continuously applied.

3. Procedure according to claim 1 or 2, **characterised by** the interruption being controlled by software, in which the comparison of the motor current (l_{M}) and/or the parameter depending on the same (Us) with the limit value (l_{M,lim}) is cyclically repeated.

4. Procedure according to one of the preceding claims, **characterised by** a counter (X) being incremented when the motor current (l_{M}) and/or the parameter depending on the same (U_{S}) exceeds the limit value and the power supply (9, 11) being interrupted when the counter (X) reaches a maximum counter reading (Xₘₐₓ) or a counter (X) being decremented starting from a maximum counter reading (Xₘₐₓ) when the motor current (l_{M}) and/or the parameter depending on the same (Uₛ) exceeds the limit value and the power supply (9, 11) being interrupted when the counter (X) reaches the value zero.

5. Procedure according to claim 4, **characterised by** the maximum counter reading (Xₘₐₓ) corresponding to or being less than the time period that, starting from a certain temperature limit (ϑₗᵢₘ), elapses while the maximum motor current (l_{M,max}) is flowing until a permissible maximum temperature (ϑₘₐₓ) of the electric motor (1) is reached.

6. Procedure according to claim 4 or 5, **characterised by** the counter (X) being decremented when the motor current (l_{M}) and/or the parameter depending on the same (U_{S}) falls below the limit value (l_{M,lim}), in particular being decremented only when it is greater than zero, or the counter (X) being incremented when the motor current (l_{M}) and/or the parameter depending on the same (U_{S}) falls below the limit value (l_{M,lim}), in particular being incremented only when it is less than the maximum counter reading (Xₘₐₓ).

7. Procedure according to claim 6, **characterised by** the counter (X) being incremented per unit of time when exceeding the limit value, in particular incrementation per cycle, with a larger step size (xₐ) than the decrementation of the counter per unit of time when falling below the limit value, in particular decrementation per cycle, by a corresponding step size (x_{b}) or the decrementation of the counter (X) per unit of time when exceeding the limit value, in particular decrementation per cycle, with a larger step size than the incrementation of the counter per unit of time when falling below the limit value, in particular incrementation per cycle, by a corresponding step size.

8. Procedure according to claim 6 or 7, **characterised by** the interruption of the power supply (9, 11) ending only when the counter (X) lies below a percentage value (Y) of the maximum counter reading (Xₘₐₓ), in particular at least 50% below the maximum counter reading (Xₘₐₓ), or the interruption of the power supply (9, 11) ending only when the counter (X) lies above a percentage value (Y) of the maximum counter reading (Xₘₐₓ), in particular at least 50% above the maximum counter reading (Xₘₐₓ).

9. Procedure according to one of the preceding claims, **characterised by** the counter reading (X) being stored and used as the starting value for the counter (X) when the power supply (9, 11) to the electric motor (1) is established and in particular is restored.

10. Procedure according to one of the preceding claims, **characterised by** the interruption of the power supply (9, 11) being realised by interrupting the supply voltage (VDD) to the driver circuit (6a) of an inverter (6) supplying the electric motor (1) in normal operation by means of an electronic control unit (17).

11. Procedure according to one of the preceding claims, **characterised by** the motor current (l_{M}) and/or the parameter depending on the same (U_{S}) also being determined and checked in an operational readiness mode of the electric motor (1) and, when the motor current (l_{M}) and/or the parameter depending on it (U_{S}) exceeds a readiness limit value in operational readiness mode, semiconductor switches (6b) of an inverter (6) supplying the electric motor (1) in normal operation being turned on individually in sequence.

12. Procedure according to one of the preceding claims, **characterised by** the motor current (l_{M}) and/or the parameter depending on the same (U_{S}) being determined via a first signalling path (30) to obtain a first measured value (U₁) and simultaneously via a second signalling path (31) to obtain a second measured value (U₂), in which one of the two measured values (U₁, U₂) is inverted relative to the other of the two measured values (U₁, U₂).

13. Procedure according to one of the preceding claims, **characterised by** a mono-stable trigger circuit (28) being used to control the disconnect mechanism (14, 17), which is cyclically triggered during fault-free operation of the electric motor (1) so that the output of the trigger circuit (28) generates a constant control signal (K_{A}) to keep the disconnect mechanism (14, 17) in the closed state, and the interruption of the power supply being realised by a break in the triggering of the trigger circuit (28).

14. Circuit configuration to protect an electric motor (1), in particular a rotary pump assembly against excess temperature, with a disconnect mechanism (14, 17) to interrupt the power supply in case of a fault, **characterised by** a measuring device (7) to determine the motor current (l_{M}) consumed by the electric motor (1) and/or a parameter depending on the same (U_{S}), and a control unit (10) to check the motor current (l_{M}) or a parameter depending on the same (U_{S}), in which the control unit (10) is configured to control the disconnect mechanism (14, 17) so that the power supply is interrupted when the motor current (l_{M}) and/or the parameter depending on the same (U_{S}) independently of the actual level of the motor current (l_{M}), over a certain continuous time period or over the sum of several defined interrupted time periods, exceeds a limit value (l_{M,lim}) that is less than the permissible maximum motor current (l_{M,max}) or a corresponding value of the parameter (U_{S}) that depends on the motor current (l_{M}).

15. Circuit configuration according to claim 14, **characterised by** the measuring device (7) comprising a first signalling path (30) to obtain a first measured value (U₁) and a second signalling path (31) to obtain a second measured value (U₂), in which one of the two measured values (U₁, U₂) is inverted relative to the other of the two measured values (U₁, U₂).

16. Circuit configuration according to one of the claims 14 or 15, **characterised by** the disconnect mechanism (14, 17) being an electronic control unit (17), in particular at least a controllable semiconductor switch (29a, 29b) through which, in its closed state, a driver circuit (6a) of an inverter (6) supplying the electric motor (1) in normal operation is connected to a supply voltage (9).

17. Circuit configuration according to one of the claims 14 through 16, **characterised by** a mono-stable trigger circuit (28) controlling the disconnect mechanism (14, 17), which can be triggered by a control signal (K_{E}) of the control unit (10), in which the control unit (10) is configured to cyclically trigger the trigger circuit (28) during fault-free operation of the electric motor (1) and the trigger circuit (28) is configured to generate a constant control signal (KA) due to the cyclical triggering in order to keep the disconnect mechanism (14, 17) in the closed state, and in which the control unit (10) is configured to stop cyclical triggering when the motor current (l_{M}) and/or the parameter depending on the same (Uₛ) exceeds a limit value (l_{M,lim}) over a defined uninterrupted period of time or over several interrupted periods of time.

18. Electric motor, in particular of a rotary pump assembly, with motor electronics encompassing a circuit configuration according to one of the claims 14 through 17.

## Revendications

1. Procédé de protection d'un moteur électrique (1), tout particulièrement d'un groupe motopompe centrifuge, contre la surchauffe, dans lequel, en cas de défaut, l'ouverture d'un dispositif séparateur (14, 17) provoque l'interruption de l'alimentation en tension (9, 11), **caractérisé en ce que** le courant de moteur (l_{M}) absorbé par le moteur électrique (1) et/ou une variable (Uₛ) en dépendant sont mesurés et contrôlés, sachant que l'interruption est provoquée lorsque le courant de moteur (l_{M}) et/ou la variable (U_{S}) en dépendant dépassent, indépendamment de la valeur effective du courant de moteur (l_{M}), un seuil (l_{M,lim}), lequel est inférieur au courant de moteur maximal admissible (l_{M,max}) ou à une valeur correspondante de la variable (U_{S}) dépendante du courant de moteur (l_{M}) et ce, pendant une certaine période ininterrompue ou une somme de périodes interrompues définies.

2. Procédé selon la revendication 1, **caractérisé en ce que** la valeur du seuil (l_{M,lim}) est entre 1/3 et 2/3 du courant de moteur (l_{M,max}), correspond en particulier au courant de moteur maximal (l_{M,lim}) pour lequel, lorsqu'il est atteint sans interruption, une température limite (ϑₗᵢₘ) n'est pas dépassée.

3. Procédé selon la revendication 1 ou 2, **caractérisé en ce que** l'interruption est commandée par un logiciel, sachant que le courant de moteur (l_{M}) et/ou la variable (Us) en dépendant sont comparés de façon cyclique au seuil (l_{M,lim}).

4. Procédé selon l'une des revendications précédentes, **caractérisé en ce que** la valeur d'un compteur (X) est augmentée lorsque le courant de moteur (l_{M}) et/ou la variable (Us) en dépendant dépassent le seuil et l'alimentation en tension (9, 11) est interrompue lorsque la valeur du compteur (X) égale une valeur maximale (Xₘₐₓ) ou que la valeur d'un compteur (X) diminue à partir d'une valeur maximale (Xₘₐₓ) lorsque le courant de moteur (l_{M}) et/ou la variable (Us) en dépendant dépassent le seuil et l'alimentation en tension (9, 11) est interrompue lorsque la valeur du compteur (X) égale zéro.

5. Procédé selon la revendication 4, **caractérisé en ce que** la valeur maximale du compteur (Xₘₐₓ) correspond à la période ou à une période plus courte s'écoulant, à partir d'une température limite définie (ϑₗᵢₘ), lorsque le courant de moteur maximal (l_{M},ₘₐₓ) traverse le circuit, et ce jusqu'à ce qu'une température maximale admissible (ϑₘₐₓ) du moteur électrique (1) soit atteinte.

6. Procédé selon la revendication 4 ou 5, **caractérisé en ce que** la valeur du compteur (X) diminue lorsque le courant de moteur (l_{M}) et/ou la variable (U_{S}) en dépendant passent en-dessous du seuil (l_{M,lim}), tout particulièrement lorsqu'elle est supérieure à zéro ou que la valeur du compteur (X) augmente lorsque le courant de moteur (l_{M}) et/ou la valeur (U_{S}) en dépendant passent en-dessous du seuil (l_{M,lim}), tout particulièrement lorsqu'elle est inférieure à la valeur maximale du compteur (Xₘₐₓ).

7. Procédé selon la revendication 6, **caractérisé en ce que** l'incrément (xₐ) de l'augmentation de la valeur du compteur (X) par unité de temps en cas de dépassement du seuil, en particulier l'incrémentation par cycle, est plus grand que la diminution de la valeur du compteur par unité de temps en cas de passage en-dessous du seuil, en particulier la décrémentation par cycle, d'un incrément correspondant (x_{b}) ou que l'incrément de la diminution de la valeur du compteur (X) par unité de temps en cas de dépassement du seuil, en particulier la décrémentation par cycle, est plus grand que l'augmentation de la valeur du compteur par unité de temps en cas de passage en-dessous du seuil, en particulier l'incrémentation par cycle d'un incrément correspondant.

8. Procédé selon la revendication 6 ou 7, **caractérisé en ce que** l'interruption de l'alimentation en tension (9, 11) n'est annulée que lorsque la valeur du compteur (X) revient sous un certain pourcentage (Y) de la valeur maximale du compteur (Xₘₐₓ), plus particulièrement au moins 50% sous la valeur du compteur maximale (Xₘₐₓ) ou que l'interruption de l'alimentation en tension (9, 11) est de nouveau annulée lorsque la valeur du compteur (X) dépasse un pourcentage (Y) de la valeur du compteur maximale (Xₘₐₓ), plus particulièrement lorsqu'elle a atteint au moins 50% de la valeur du compteur maximale (Xₘₐₓ).

9. Procédé selon l'une des revendications précédentes, **caractérisé en ce que** la valeur du compteur (X) est enregistrée et utilisée comme valeur initiale pour le compteur (X) lorsque l'alimentation en tension (9, 11) du moteur électrique (1) est établie, et plus particulièrement rétablie.

10. Procédé selon l'une des revendications précédentes, **caractérisé en ce que** l'interruption de l'alimentation en tension (9, 11) est induite par une interruption de l'alimentation en tension (VDD) du circuit de commande (6a) d'un onduleur (6) chargé d'alimenter le moteur électrique (1) en mode de fonctionnement normal au moyen d'un dispositif de commutation (17).

11. Procédé selon l'une des revendications précédentes, **caractérisé en ce que** le courant de moteur (l_{M}) et/ou la variable (U_{S}) en dépendant sont aussi déterminés lorsque le moteur électrique (1) est en mode de disponibilité opérationnelle, et que, lorsque le courant de moteur (l_{M}) et/ou la variable (U_{S}) en dépendant dépassent en mode de disponibilité opérationnelle un seuil de disponibilité opérationnelle, des commutateurs à semi-conducteur (6b) d'un onduleur (6) chargé d'alimenter le moteur électrique (1) en mode de fonctionnement normal sont séquentiellement activés les uns après les autres.

12. Procédé selon l'une des revendications précédentes, **caractérisé en ce que** le courant de moteur (l_{M}) et/ou la variable (U_{S}) en dépendant sont déterminés par l'intermédiaire d'un premier trajet de signal (30) de récupération d'une première valeur de mesure (U₁) et simultanément par l'intermédiaire d'un second trajet de signal (31) de récupération d'une seconde valeur de mesure (U₂), sachant que les deux valeurs de mesure (U₁, U₂) sont inversées l'une par rapport à l'autre.

13. Procédé selon l'une des revendications précédentes, **caractérisé en ce que**, pour la commande du dispositif séparateur (14, 17), une bascule monostable (28) est utilisée et qui, lorsque le moteur électrique (1) fonctionne correctement, est déclenchée pour que la sortie de la bascule (28) émette un signal de commande constant (K_{A}) destiné à maintenir le dispositif séparateur (14, 17) à l'état fermé et que l'interruption de l'alimentation en tension est réalisée **en ce que** le déclenchement de la bascule (28) est suspendue.

14. Arrangement de circuit de protection contre la surchauffe d'un moteur électrique (1), plus particulièrement un groupe motopompe centrifuge, avec un dispositif séparateur (14, 17) d'interruption d'une alimentation en tension en cas de défaut, **caractérisé par** un dispositif de mesure (7) destiné à déterminer le courant de moteur (l_{M}) et/ou la variable (U_{S}) en dépendant absorbés par le moteur électrique (1), et une unité de commande (10) de contrôle du courant de moteur (l_{M}) et/ou de la variable (U_{S}) en dépendant, sachant que l'unité de commande (10) est configurée pour commande le dispositif séparateur (14, 17) de telle façon que l'alimentation en tension est interrompue lorsque le courant de moteur (l_{M}) et/ou la variable (U_{S}) en dépendant dépassent, indépendamment de la valeur effective du courant de moteur (l_{M}), un seuil (l_{M,lim}), lequel est inférieur au courant de moteur maximal admissible (l_{M,max}) ou à une valeur correspondante de la variable (U_{S}) dépendante du courant de moteur (l_{M}) et ce, pendant une certaine période ininterrompue ou une somme de périodes interrompues définies.

15. Arrangement de circuit selon la revendication 14, **caractérisé en ce que** le dispositif de mesure (7) comprend un premier trajet de signal (30) de récupération d'une première valeur de mesure (U₁) et un second trajet de signal (31) de récupération d'une seconde valeur de mesure (U₂), sachant que les deux valeurs de mesure (U₁, U₂) sont inversées l'une par rapport à l'autre.

16. Arrangement de circuit selon l'une des revendications 14 ou 15, **caractérisé en ce que** le dispositif séparateur (14, 17) est un dispositif de commutation électronique (17), plus particulièrement un commutateur à semi-conducteur commandable (29a, 29b) servant, lorsqu'il est en état fermé, à relier à une tension d'alimentation (9) un circuit de commande (6a) d'un onduleur (6) chargé d'alimenter le moteur électrique (1) en mode de fonctionnement normal.

17. Arrangement de circuit selon l'une des revendications 14 à 16, **caractérisé par** une bascule monostable (28) commandant le dispositif séparateur (14, 17) et déclenchable au moyen d'un signal de commande (K_{E}) de l'unité de commande (10), sachant que l'unité de commande (10) est configurée pour, lorsque le moteur électrique (1) fonctionne correctement, déclencher de façon cyclique la bascule (28) et que la bascule (28) est configurée pour, au moyen d'un déclenchement cyclique, émettre un signal de commande constant (KA) destiné à maintenir le dispositif séparateur (14, 17) à l'état fermé et sachant que l'unité de commande (10) est réalisée pour suspendre le déclenchement cyclique lorsque le courant de moteur (l_{M}) et/ou la variable (U_{S}) en dépendant dépassent un seuil (l_{M,lim}) pendant une certaine période ininterrompue ou une somme de périodes interrompues définies.

18. Moteur électrique, plus particulièrement un groupe motopompe centrifuge avec un circuit électronique de moteur comprenant un arrangement de circuit selon l'une des revendications 14 à 17.
